## (19) Europäisches Patentamt
European Patent Office
Office européen des brevets

(11) **EP 0 945 608 B1**

## (12) EUROPÄISCHE PATENTSCHRIFT

(45) Veröffentlichungstag und Bekanntmachung des Hinweises auf die Patenterteilung:
**11.12.2002 Patentblatt 2002/50**

(51) Int Cl.[7]: **F02D 41/02**, F01N 3/08, B01D 53/94

(21) Anmeldenummer: **99105640.9**

(22) Anmeldetag: **19.03.1999**

(54) **Verfahren zum Betreiben einer Abgasreinigungsanlage enthaltend eine Schwefelfalle und einen Stickoxid-Speicherkatalysator**

Process for operating an exhaust gas purification apparatus comprising a sulfur-trap and a nitrogen oxide storage catalytic converter

Procédé d'opération d'un dispositif d'épuration des gaz d'échappement comprenant un piège de soufre et un catalyseur d'accumulation des oxydes d'azote

(84) Benannte Vertragsstaaten:
**AT BE DE ES FI FR GB IT LU NL PT SE**

(30) Priorität: **27.03.1998 DE 19813654**

(43) Veröffentlichungstag der Anmeldung:
**29.09.1999 Patentblatt 1999/39**

(73) Patentinhaber: **OMG AG & Co. KG**
**63457 Hanau (DE)**

(72) Erfinder:
- **Strehlau, Wolfgang, Dr.**
  **65538 Grosskrotzenburg (DE)**
- **Göbel, Ulrich, Dr.**
  **65795 Hattersheim (DE)**
- **Lox, Egbert, Dr.**
  **63457 Hanau (DE)**

- **Müller, Wilfried**
  **61184 Karben (DE)**
- **Domesle, Rainer, Dr.**
  **63755 Alzenau-Kälberau (DE)**

(74) Vertreter: **Stellbrink, Axel et al**
**Vossius & Partner**
**Siebertstrasse 4**
**81675 München (DE)**

(56) Entgegenhaltungen:
**EP-A- 0 580 389      EP-A- 0 582 917**
**EP-A- 0 613 714      EP-A- 0 761 286**

- **PATENT ABSTRACTS OF JAPAN vol. 017, no. 400 (C-1089), 27. Juli 1993 (1993-07-27) & JP 05 076771 A (MAZDA MOTOR CORP), 30. März 1993 (1993-03-30)**

## Beschreibung

Die vorliegende Erfindung betrifft ein Verfahren zum Betreiben einer Abgasreinigungsanlage für eine Brennkraftmaschine, die während der überwiegenden Betriebsdauer mit mageren Luft/Kraftstoff-Verhältnissen betrieben wird. Die Abgasreinigungsanlage enthält zur Umsetzung der im Abgas enthaltenen Stickoxide einen Stickoxid-Speicherkatalysator. Zum Schutz des Speicherkatalysators vor Vergiftung durch Schwefeloxide befindet sich stromaufwärts des Speicherkatalysators eine Schwefelfalle zur Speicherung von Schwefeloxiden durch Bildung von Sulfaten.

Stickoxid-Speicherkatalysators wurden speziell für die Abgasreinigung von mager betriebenen Brennkraftmaschinen entwickelt. Zur Klasse der mager betriebenen Brennkraftmaschinen gehören mager betriebene Benzinmotoren, sogenannte Magermotoren, und Dieselmotoren. Magermotoren, insbesondere mit Benzin-Direkteinspritzung, werden zunehmend im Kraftfahrzeugbau eingesetzt, da sie eine theoretische Kraftstoffersparnis von bis zu 25 % gegenüber stöchiometrisch betriebenen Brennkraftmaschinen ermöglichen.

Im Abgas von Brennkraftmaschinen finden sich als wesentliche Schadstoffe Kohlenmonoxid CO, unverbrannte Kohlenwasserstoffe HC und Stickoxide $NO_x$. Darüber hinaus enthält das Abgas noch geringe Anteile an Wasserstoff $H_2$ sowie Schwefeloxide $SO_x$, die vom Schwefelgehalt des Kraftstoffes und der Schmieröle der Maschine herrühren. Durch moderne Abgaskatalysatoren können die Schadstoffe mit Ausnahme der Schwefeloxide im stöchiometrischen Betrieb einer Brennkraftmaschine zu einem hohen Prozentsatz in die unschädlichen Komponenten Wasser, Kohlendioxid und Stickstoff umgesetzt werden. Die für die Abgasreinigung von stöchiometrisch betriebenen Brennkraftmaschinen entwickelten Katalysatoren werden als Dreiwegkatalysatoren bezeichnet.

Stöchiometrische Bedingungen liegen bei Luftzahlen $\lambda$ von 1 vor. Bei der Luftzahl $\lambda$ handelt es sich um das auf stöchiometrische Bedingungen normierte Luft/Kraftstoff-Verhältnis. Das Luft/Kraftstoff-Verhältnis gibt an, wieviel Kilogramm Luft für die vollständige Verbrennung von einem Kilogramm Treibstoff benötigt werden. Bei üblichen Kraftstoffen liegt das stöchiometrische Luft/Kraftstoff-Verhältnis bei einem Wert von 14,6. Die Luftzahl des von der Brennkraftmaschine emittierten Abgases entspricht der Luftzahl des der Brennkraftmaschine zugeführten Luft/Kraftstoff-Gemisches. Abgas mit Luftzahlen über 1 wird als mager und Abgas mit Luftzahlen unter 1 wird als fett bezeichnet.

Der stöchiometrische Betrieb wird durch Regelung des der Brennkraftmaschine angebotenen Luft/Kraftstoff-Verhältnisses eingehalten. Zur Regelung dient das Signal eines Sauerstoffsensors, einer sogenannten $\lambda$-Sonde. Dreiwegkatalysatoren können die drei. Schadstoffe HC, CO und $NO_x$ im Abgas nur in einem sehr engen Luftzahlintervall zwischen etwa 0,97 bis etwa 1,03 gleichzeitig umsetzen.

Während die Reinigung der Abgase von stöchiometrisch betriebenen Brennkraftmaschinen einen sehr hohen Stand erreicht hat, stellt die Umsetzung der Stickoxidemissionen von mager betriebenen Brennkraftmaschinen noch ein großes Problem dar. Während der überwiegenden Dauer ihres Betriebes arbeiten diese Brennkraftmaschinen mit Luftzahlen größer als 1,3. Ihr Abgas enthält etwa 3 bis 15 Vol.-% Sauerstoff. Es liegen also stark oxidierende Bedingungen im Abgas vor. Unter diesen Bedingungen können die Stickoxide im Abgas nicht mehr auf einfache Weise reduziert werden. Zur Lösung dieses Problems wurden unter anderem die erwähnten Stickoxid-Speicherkatalysatoren entwickelt.

Funktionsweise und Zusammensetzung von Stickoxid-Speicherkatalysatoren sind zum Beispiel aus der EP 0 560 991 Bl bekannt. Als Speichermaterial enthalten diese Katalysatoren wenigstens eine Komponente aus der Gruppe der Alkalimetalle (Kalium, Natrium, Lithium, Cäsium), der Erdalkalimetalle (Barium, Kalzium) oder der Seltenerdmetalle (Lanthan, Yttrium). Als katalytisch aktives Element enthält der Speicherkatalysator Platin. Unter oxidierenden Abgasbedingungen, das heißt im Magerbetrieb, können die Speichermaterialien, die im Abgas enthaltenen Stickoxide in Form von Nitraten speichern. Hierzu ist es jedoch erforderlich, daß die Stickoxide, welche je nach Bauart des Motors und seiner Betriebsweise zu etwa 50 bis 90 % aus Stickstoffmonoxid bestehen, zunächst zu Stickstoffdioxid oxidiert werden. Dies geschieht an der Platinkomponente des Speicherkatalysators.

Da die Speicherkapazität eines Speicherkatalysators begrenzt ist, muß er von Zeit zu Zeit regeneriert werden. Hierzu wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoff-Gemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die in Form von Nitraten gespeicherten Stickoxide wieder freigesetzt (desorbiert) und am Speicherkatalysator unter gleichzeitiger Oxidation von Kohlenmonoxid, Kohlenwasserstoffen und Wasserstoff, wie bei konventionellen Dreiwegkatalysatoren zu Stickstoff reduziert.

Trotz ihres großen Potentials für die Entfernung der Stickoxide aus dem Abgas von mager betriebenen Brennkraftmaschinen fanden Stickoxid-Speicherkatalysatoren bisher noch keinen verbreiteten Einsatz. Ein wesentliches Problem bei der Verwendung von Stickoxid-Speicherkatalysatoren stellt nämlich der Schwefelgehalt des Kraftstoffes dar. Er wird vom Verbrennungsmotor überwiegend in Form von Schwefeldioxid emittiert. Schwefeldioxid wirkt für konventionelle Dreiwegkatalysatoren und besonders für die Stickoxid-Speicherkatalysatoren als Katalysatorgift. Die Vergiftung mit Schwefel führt bei Dreiwegkatalysatoren zu einer Verringerung der Schadstoffumsetzung und zu einer schnelleren Katalysatoralterung. Im Allgemeinen ist die Vergiftung von Dreiwegkatalysatoren weitgehend reversibel. Die Schwefelkomponenten des Abgases liegen auf dem Dreiwegkatalysator in Form von Sulfaten vor. Die Regeneration des Katalysators erfolgt im normalen Fahrbetrieb, während Fahrphasen mit hohen Abgastemperaturen und leicht reduzierendem Abgas. Unter diesen Bedingungen werden die Sulfate reduziert und der Schwefel in Form von Schwefeldioxid oder Schwefelwasserstoff emittiert. Die Emission von Schwefelwasserstoff kann dabei durch bestimmte Maßnahmen am Katalysator und der Motorsteuerung weitgehend unterdrückt werden.

Die Vergiftung eines Stickoxid-Speicherkatalysators durch Schwefeloxide erfolgt prinzipiell in der gleichen Weise wie die Abspeicherung der Stickoxide. Das vom Motor emittierte Schwefeldioxid wird an der katalytisch aktiven Edelmetallkomponente des Speicherkatalysators zu Schwefeltrioxid oxidiert. Schwefeltrioxid reagiert mit den Speichermaterialien des Speicherkatalysators unter Bildung der entsprechenden Sulfate. Besonders nachteilig ist dabei, daß die Absorption von Schwefeltrioxid gegenüber der Absorption von Stickoxiden bevorzugt ist und die gebildeten Sulfate thermisch sehr stabil sind. Es kommt daher zu einer deutlichen Verminderung der Stickoxidspeicherkapazität des Katalysators durch die Vergiftung mit Schwefeloxiden, die, im Gegensatz zur Situation bei Dreiwegkatalysatoren, wegen der hohen thermischen Stabilität der Sulfate der Speichermaterialien auch unter reduzierenden Abgasbedingungen nur bei hohen Abgastemperaturen reversibel ist.

Strehlau et al (Tagung "Motor und Umwelt" Graz, 1997, Proceedings, Seiten 15 - 30) fanden, daß bariumhaltige Speicherkatalysatoren optimal bei Abgastemperaturen vor dem Katalysator von 650°C und Luftzahlen von 0,98 entschwefelt werden können. Solche Abgasbedingungen können auch im Teillastbetrieb von Fahrzeugen durch Änderung der Betriebsparameter des Motors eingestellt werden. Die Änderung der Betriebsparameter muß dabei so vorgenommen werden, daß dadurch möglichst keine Änderung des Drehmoments verursacht wird. Die Entschwefelung bei hohen Abgastemperaturen ist jedoch mit einem erheblichen Mehrverbrauch an Kraftstoff verbunden, da der Kraftstoff lediglich zum Aufheizen und Konditionieren des Stickoxid-Speicherkatalysators verwendet, nicht aber in Fahrleistung umgesetzt wird.

Die EP 0 580 389 A1 beschreibt einen Stickoxid-Speicherkatalysator, der immer dann entschwefelt wird, wenn die Abgastemperatur höher als 550 °C ist. Ist dies der Fall, wird das Luft/Kraftstoff-Verhältnis zur Entschwefelung des Speicherkatalysators wiederholt zwischen fett und mager hinund hergeschaltet.

Gemäß der EP 0 582 917 A1 wird vorgeschlagen, die Vergiftung des Speicherkatalysators mit Schwefel durch eine stromaufwärts des Speicherkatalysators in den Abgasstrom eingefügte Schwefelfalle zu vermindern. Als Speichermaterialien für die Schwefelfalle werden Alkalimetalle (Kalium, Natrium, Lithium und Cäsium), Erdalkalimetalle (Barium und Kalzium) und Seltenerdmetalle (Lanthan, Yttrium) vorgeschlagen. Die Schwefelfalle weist dabei zusätzlich als katalytisch aktive Komponente Platin auf. Nachteilig bei dem Vorschlag der EP 0 582 917 A1 ist allerdings, daß keine Entschwefelung der Schwefelfalle vorgesehen ist, das heißt nach Erreichen der Speicherkapazität der Schwefelfalle passieren die im Abgas enthaltenen Schwefeloxide die Schwefelfalle ungehindert und können den nachgeschalteten Stickoxid-Speicherkatalysator vergiften.

Eine Verbesserung dieses Konzeptes gibt die EP 0 625 633 A1 an. Gemäß dieser Schrift wird ebenfalls vor dem Stickoxid-Speicherkatalysator eine Schwefelfalle im Abgasstrom der Brennkraftmaschine angeordnet. Diese Kombination aus Schwefelfalle und Stickoxid-Speicherkatalysator wird so betrieben, daß unter mageren Abgasbedingungen Schwefeloxide auf der Schwefelfalle und die Stickoxide auf dem Stickoxid-Speicherkatalysator gespeichert werden. Durch periodisches Ändern der Abgasbedingungen von mager nach fett werden die auf der Schwefelfalle gespeicherten Sulfate zu Schwefeldioxid und die auf dem Stickoxid-Speicherkatalysator gespeicherten Nitrate zu Stickstoffdioxid zersetzt. Hierbei besteht die Gefahr, daß Schwefeldioxid und Stickstoffdioxid über dem Stickoxid-Speicherkatalysator miteinander zu Schwefeltrioxid und Stickstoffmonoxid reagieren und Schwefeltrioxid auf dem Stickoxid-Speicherkatalysator in Form von Sulfaten gespeichert wird.

Gemäß der EP 0 625 633 A1 kann eine solche Reaktion jedoch nur im geringen Maße stattfinden, da die Zersetzungsrate der Nitrate im allgemeinen wesentlich größer ist, als die entsprechende Zersetzungsrate der Sulfate. Die Zersetzung der Nitrate erfolgt in einem kurzen Zeitintervall von nur etwa 5 bis 20 Sekunden, während für die vollständige Zersetzung der Sulfate auf der Schwefelfalle Zeitintervalle von bis zu 10 Minuten benötigt werden. Es kommt daher nur zu einer sehr geringen zeitlichen Überlappung der Emission von Schwefeldioxid und Stickstoffdioxid. Hierdurch kann die Vergiftung des Stickoxid-Speicherkatalysators durch Schwefel während der Entschwefelung der Schwefel falle gering gehalten werden. Eine weitere Verbesserung ergibt sich dadurch, daß zur Freisetzung der Stickoxide vom Stickoxid-Speicherkatalysator das Abgas stark und zur Freisetzung der Schwefeloxide von der Schwefelfalle nur gering angefettet wird.

Die im Abgas einer Brennkraftmaschine enthaltenen Mengen an Schwefeloxiden sind wesentlich geringer, als die Menge der Stickoxide. Es ist deshalb nicht notwendig, bei jeder Freisetzung der Stickoxide vom Speicherkatalysator auch eine Entschwefelung der Schwefelfalle vorzunehmen. Während die Periodendauer für die Freisetzung der Stickoxide vom Stickoxid-Speicherkatalysator bei etwa einer Minute liegt, beträgt die Periodendauer für die Freisetzung der Schwefeloxide von der Schwefelfalle gemäß der EP 0 625 633 A1 mehrere Stunden.

Die vorgeschlagenen Verfahren zum Betreiben einer Abgasreinigungsanlage aus Schwefelfalle und Stickoxid-Speicherkatalysator haben den Nachteil, daß sie zum Teil bewußt eine Vergiftung des Stickoxid-Speicherkatalysators mit Sulfaten in Kauf nehmen. Aufgabe der vorliegenden Erfindung ist es daher, ein verbessertes Verfahren zum Betreiben einer Abgasreinigungsanlage aus Schwefelfalle und Stickoxid-Speicherkatalysator anzugeben, welches die genannten Nachteile weitgehend vermeidet. Darüber hinaus soll mit dem gewünschten Verfahren nur ein geringer Mehrverbrauch an Kraftstoff verbunden sein.

Diese Aufgabe wird gelöst, durch ein Verfahren zum Betreiben einer Abgasreinigungsanlage für eine Brennkraftmaschine, die während der überwiegenden Betriebsdauer mit mageren Luft/Kraftstoff-Verhältnissen betrieben wird, wobei die Abgasreinigungsanlage enthält:

- einen Stickoxid-Speicherkatalysator mit einem Aktivitätsfenster $\Delta T_{NOX}$ zwischen den Temperaturen $T_{K,1}$ und $T_{K,2}$ für die Speicherung der Stickoxide bei Luftzahlen des Abgases größer 1 und Freisetzung der Stickoxide bei Luftzahlen kleiner gleich 1 und einer Entschwefelungstemperatur $T_{K,DeSOx}$, oberhalb derer auf dem Katalysator gespeicherte Sulfate bei Luftzahlen kleiner gleich 1 zersetzt werden und
- eine stromaufwärts des Stickoxid-Speicherkatalysators und in einem Abstand zu diesem angeordnete Schwefelfalle mit einer Entschwefelungstemperatur $T_{S,DeSOx}$ oberhalb derer auf der Schwefelfalle gespeicherte Sulfate bei Luftzahlen kleiner gleich 1 zersetzt werden,

wobei zwischen Schwefelfalle und Speicherkatalysator eine Temperaturdifferenz $\Delta T_{S,K}$ zwischen der Abgastemperatur $T_S$ vor der Schwefelfalle und der Abgastemperatur $T_K$ vor dem Speicherkatalysator besteht, und das Verfahren die folgenden Schritte aufweist:

a) Speichern der im Abgas enthaltenen Stickoxide auf dem Stickoxid-Speicherkatalysator und der Schwefeloxide auf der Schwefelfalle bei Luftzahlen über 1 und Abgastemperaturen $T_K$ innerhalb des Aktivitätsfensters $\Delta T_{NOX}$, wobei gleichzeitig die Abgastemperatur $T_S$ kleiner als die Entschwefelungstemperatur $T_{S,DeSOx}$ ist und zyklisches Absenken der Luftzahl des Abgases unter 1 zur Freisetzung der gespeicherten Stickoxide (Abschluß eines Speicherzyklus),

b) Entschwefeln der Schwefelfalle nach jeweils einer vorgegebenen Anzahl $N_1$ von Stickoxid-Speicherzyklen unmittelbar nach Abschluß eines Speicherzyklus durch Anheben der Abgastemperatur $T_S$ über die Entschwefelungstemperatur $T_{S,DeSOx}$ der Schwefelfalle sowie Absenken der Luftzahl des Abgases unter 1 und

c) zyklische Wiederholung der Schritte a) und b).

Unter dem Begriff "Speichern" wird im Rahmen dieser Erfindung sowohl die chemische Umsetzung der zu speichernden Komponenten des Abgases mit dem Speichermaterial zu Nitriten und Nitraten oder Sulfiten und Sulfaten als auch die physikalische Adsorption auf der Oberfläche des Speichermaterials verstanden. Der Stickoxid-Speicherkatalysator wird im folgenden nur als Speicherkatalysator bezeichnet.

Die Arbeitsweise des Verfahrens wird an Hand der Figuren 1 bis 21 erläutert. Es zeigen:

**Figur 1:** Anordnung einer Abgasreinigungsanlage aus Schwefelfalle und Stickoxid-Speicherkatalysator an einem Fahrzeug mit motornaher Anordnung der Schwefelfalle und Anordnung des Speicherkatalysators im Unterbodenbereich des Fahrzeugs

**Figur 2:** Anordnung einer Abgasreinigungsanlage aus Schwefelfalle und Stickoxid-Speicherkatalysator an einem Fahrzeug mit Anordnung von Schwefelfalle und Speicherkatalysator in einem gemeinsamen Gehäuse im Unterbodenbereich des Fahrzeugs

**Figur 3:** Schematische Darstellung des Aktivitätsfensters eines Speicherkatalysators

**Figur 4:** Schematische Darstellung des Temperaturverlaufes längs der Abgasreinigungsanlage vom Motor bis zum Speicherkatalysator für drei verschiedene Verfahrensschritte und getrennter Anordnung von Schwefelfalle und Speicherkatalysator

**Figur 5:** Schematische Darstellung des Temperaturverlaufes längs der Abgasreinigungsanlage vom Motor bis zum Speicherkatalysator für drei verschiedene Verfahrensschritte und motornaher Anordnung der Schwefelfalle

**Figur 6:** Schematische Darstellung des Temperaturverlaufes längs der Abgasreinigungsanlage vom Motor bis zum Speicherkatalysator für drei verschiedene Verfahrensschritte und Anordnung von Schwefelfalle und Speicherkatalysator in einem Gehäuse

**Figur 7-10:**    Entschwefelung der Schwefelfallen der Beispiele 1 bis 4

**Figur 11-13:**    Entschwefelung der Schwefelfallen der Vergleichsbeispiele 1 bis 3

**Figur 14:**    Entschwefelungsverhalten einer Schwefelfalle bei 640°C und Absenken der Luftzahl auf einen Wert von 0,98

**Figur 15:**    Entschwefelungsverhalten einer Schwefelfalle bei 640°C und Absenken der Luftzahl auf einen Wert von 0,95

**Figur 16:**    Dauer der Entschwefelung in Abhängigkeit von der Luftzahl

**Figur 17:**    Prozentanteile von Schwefeldioxid und Schwefelwasserstoff im Abgas hinter der Schwefelfalle bei verschiedenen Luftzahlen während der Entschwefelung

**Figur 18:**    Prozentanteile von Schwefeldioxid und Schwefelwasserstoff im Abgas hinter dem Speicherkatalysator bei verschiedenen Luftzahlen während der Entschwefelung

**Figur 19:**    Abgasreinigungsanlage mit nachgeschaltetem Katalysator zur Unterdrückung der Emission von Schwefelwasserstoff

**Figur 20:**    Abgasreinigungsanlage mit Sekundärlufteindüsung vor dem Speicherkatalysator während der Entschwefelung der Schwefelfalle zur Unterdrückung der Emission von Schwefelwasserstoff

**Figur 21:**    Abgasreinigungsanlage mit motornahem Vorkatalysator zur Oxidation der Schwefeloxide

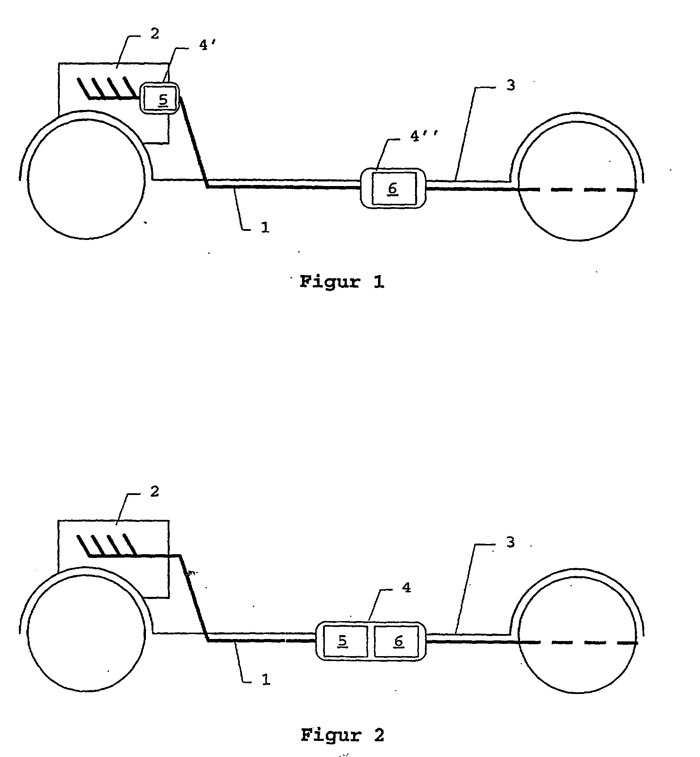

Figur 1 zeigt eine Reinigungsanlage (1) für die Abgase eines Motors (2), das heißt einer Brennkraftmaschine. (3) bezeichnet den Unterbodenbereich des Fahrzeuges. Die Abgasreinigungsanlage besteht aus einer Schwefelfalle 5 und einem Stickoxid-Speicherkatalysator 6. Die Schwefelfalle ist unmittelbar hinter dem Motorauslaß in einem eigenen Gehäuse 4' angeordnet. Der Speicherkatalysator befindet sich im Gehäuse 4" im Unterbodenbereich (3) des Fahrzeugs.

Figur 2 zeigt eine Variante der Abgasreinigungsanlage, bei welcher die Schwefelfalle (5) unmittelbar"vor dem Speicherkatalysator (6) in einem Abstand Null oder nahe Null angeordnet ist und beide in einem gemeinsamen Konvertergehäuse (4) im Unterbodenbereich des Fahrzeugs untergebracht sind.

Speichermaterialien für Stickoxide und Schwefeloxide zeigen eine ausgeprägte Abhängigkeit ihrer Speicherfähigkeit von der Abgastemperatur.

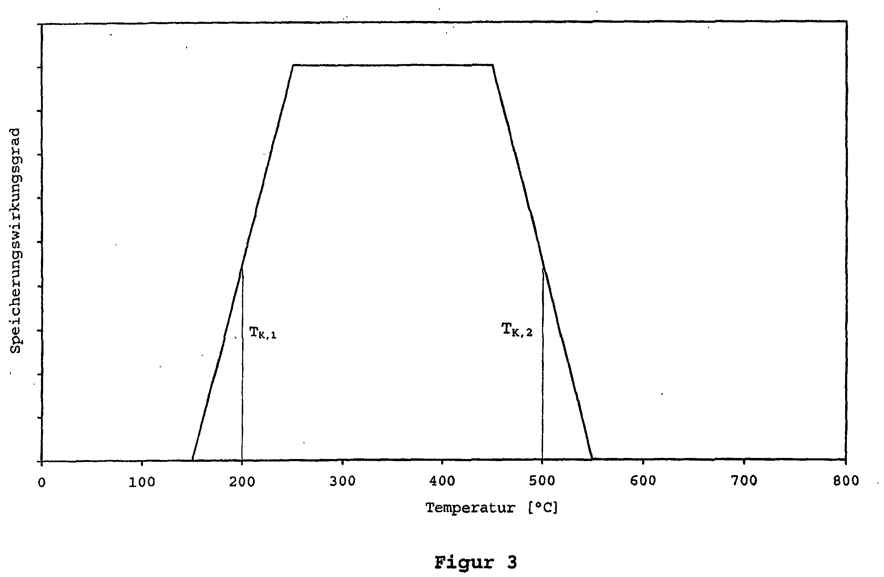

Figur 3 zeigt die Temperaturabhängigkeit des Speicherwirkungsgrades für eine bestimmte Formulierung eines Stickoxid-Speicherkatalysators. Die Speicherung der Stickoxide bei Luftzahlen über 1 (mageres Abgas) in Form von Nitraten und Freisetzung in Form von Stickoxiden bei Luftzahlen kleiner gleich 1 findet nur in einem eng begrenzten Temperaturintervall statt, dessen untere Grenze $T_{K,1}$ durch die Reaktionskinetik der Bildung von Stickstoffdioxid bedingt und dessen obere Grenze $T_{K,2}$ durch die thermodynamische Stabilität der gebildeten Alkali- bzw. Erdalkalinitrate und der entsprechenden Nitrite gegeben ist. Dieses Temperaturintervall wird im Rahmen der vorliegenden Erfindung als Aktivitätsfenster $\Delta T_{NOx}$ des Speicherkatalysators bezeichnet und wird zur zyklischen Speicherung, Freisetzung, beziehungsweise Desorption, und Reduktion der Stickoxide ausgenutzt.

Das Aktivitätsfenster des Speicherkatalysators von Figur 3 umfaßt einen Temperaturbereich von etwa 200°C bis 500°C. Andere Formulierungen von Speicherkatalysatoren weisen Aktivitätsfenster auf, die um 50 - 100°C zu tieferen bzw. zu höheren Temperaturen hin verschoben sind. Eine Verschiebung des Aktivitätsfensters zu tieferen Temperaturen ist insbesondere für den Einsatz in Dieselfahrzeugen mit ihren niedrigen Abgastemperaturen von Interesse.

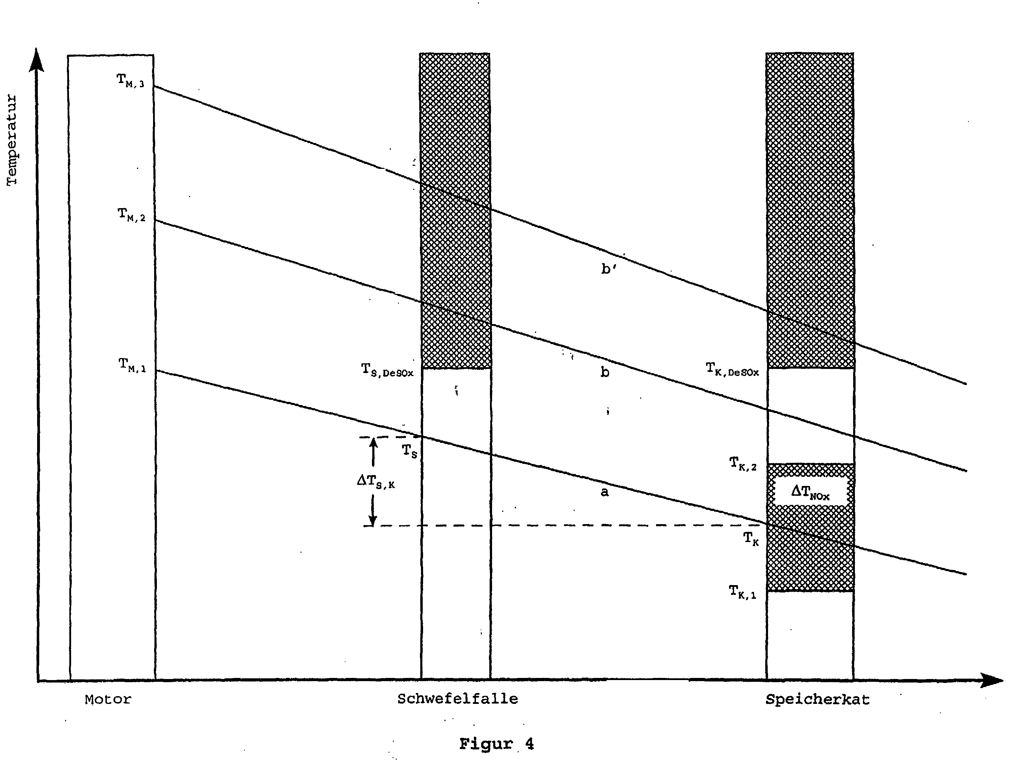

Die Figuren 4 bis 6 zeigen schematisch die Temperaturverhältnisse längs der Abgasreinigungsanlage vom Motor bis zum-Abgas-Auslaß für verschiedene Anordnungen von Motor, Schwefelfalle und Stickoxid-Speicherkatalysator. Die Positionen dieser drei Aggregate längs der Abgasreinigungsanlage sind durch vertikale Balken angedeutet. Auf der Ordinate ist die Abgastemperatur am jeweiligen Ort längs der Abgasreinigungsanlage aufgetragen. $T_{M,1}$, $T_{M,2}$, und $T_{M,3}$ bezeichnen drei verschiedene Temperaturen des Abgases am Motoraustritt.

Ausgehend von der Motoraustrittstemperatur $T_M$ verringert sich die Abgastemperatur längs der Abgasanlage durch Wärmeleitung und Wärmestrahlung. Typische Temperaturänderungen betragen 50 bis 100°C pro Meter Leitungslänge der Abgasanlage. Vereinfachend wurde in den Figuren 4 bis 6 ein linearer Abfall der Temperatur angenommen. Tatsächlich ergibt sich jedoch ein komplexerer Temperaturverlauf durch unterschiedliche Wärmeverluste längs der Abgasanlage. Insbesondere kann es auch zu örtlichen Temperaturerhöhungen durch exotherme Reaktionen an den Abgaskatalysatoren kommen. Insgesamt sind die Temperaturverläufe für eine gegebene Abgasanlage in Abhängigkeit von der Motoraustrittstemperatur relativ gut reproduzierbar und können vom Fachmann leicht ermittelt werden.

Die Abgastemperatur vor Eintritt in die Schwefelfalle ist in Figur 4 mit $T_S$ bezeichnet. $T_K$ ist die Abgastemperatur vor Eintritt in den Speicherkatalysator. $\Delta T_{S,K}$ ist die Temperaturdifferenz $T_S - T_K$ zwischen Schwefelfalle und Speicherkatalysator. Sie ist abhängig von der relativen Lage von Motor, Schwefelfalle und Speicherkatalysator zueinander und von der Motoraustrittstemperatur. Je höher die Motoraustrittstemperatur ist, je größer wird auch die Temperaturdifferenz zwischen Schwefelfalle und Speicherkatalysator.

Zum Betreiben der Abgasreinigungsanlage nach dem erfindungsgemäßen Verfahren müssen die Materialien von Schwefelfalle und Speicherkatalysatör in geeigneter Weise zueinander ausgewählt werden. Bei der Auswahl sind auch die Positionen von Schwefelfalle und Speicherkatalysator längs der Abgasreinigungsanlage wegen der geschilderten Temperaturverläufe von entscheidender Bedeutung.

In den Figuren 4 bis 6 ist das Aktivitätsfenster des Speicherkatalysators durch eine Schraffur zwischen den Temperaturen $T_{K,1}$ und $T_{K,2}$ gekennzeichnet.

Die zyklische Speicherung und Freisetzung der im Abgas enthaltenen Stickoxide am Speicherkatalysator findet bei betriebswarmen Motor im Teillastbetrieb statt. Diese Betriebsphase entspricht Schritt a) des Verfahrens und ist in den Figuren 4 bis 6 durch den Temperaturverlauf a gegeben.

Der Motor hat im Teillastbetrieb eine Austrittstemperatur des Abgases von $T_{M,1}$. Die Abgasreinigungsanlage ist so ausgelegt, daß die Abgastemperatur $T_K$ vor dem Speicherkatalysator auf einen Wert innerhalb des Aktivitätsfensters gesunken ist. Gemäß dem Diagramm von Figur 4 ist die Schwefelfalle etwa auf halbem Wege zwischen Motor und Speicherkatalysator in den Abgasstrang eingebaut. Das Material der Schwefelfalle muß dabei so ausgewählt werden, daß im Teillastbetrieb die Abgastemperatur $T_S$ nicht über die Entschwefelungstemperatur $T_{S,DeSOx}$ der Schwefelfalle ansteigt. Bei magerem Abgas werden dann die Schwefeloxide auf der Schwefelfalle und die Stickoxide auf dem Speicherkatalysator gespeichert. Beim zyklischen Umschalten auf Luftzahlen kleiner gleich 1 werden die Stickoxide vom Speicherkatalysator als Stickstoffdioxid freigesetzt und mit den reduzierenden Komponenten des Abgases (Kohlenmonoxid, Kohlenwasserstoffe und Wasserstoff) zu Stickstoff reduziert. Die auf der Schwefelfalle gespeicherten Sulfate werden dagegen nicht freigesetzt, da die Abgastemperatur $T_S$ noch kleiner als die Entschwefelungstemperatur $T_{S,DeSOx}$ ist.

Verfahrensschritt a) umfaßt einen Speicher- und Freisetzungszyklus für die Stickoxide. Er dauert je nach der Höhe der Rohemission der Brennkraftmaschine etwa 20 bis 100 Sekunden. Davon werden abhängig vom Grad der Anfettung des Abgases nur etwa 0,3 bis 20 Sekunden für die Freisetzung der Stickoxide benötigt. Ein Stickoxid-Speicherzyklus gilt nach Freisetzung der gespeicherten Stickoxide als abgeschlossen. Direkt nach einem Stickoxid-Speicherzyklus liegen also auf dem Speicherkatalysator keine durch Anfettung des Abgases leicht zersetzbaren Nitrate mehr vor.

Nach einer vorgegebenen Anzahl $N_1$ von Stickoxid-Speicherzyklen wird Verfahrensschritt b) zur Entschwefelung der Schwefelfalle eingeleitet. Hierzu wird die Motoraustrittstemperatur auf den Wert $T_{M,2}$ angehoben und die Luftzahl des Abgases auf einen Wert zwischen 0,6 und 0,9 abgesenkt.

$T_{M,2}$ wird so gewählt, daß die sich dadurch ergebende Abgastemperatur vor der Schwefelfalle (Temperaturverlauf b) oberhalb ihrer Entschwefelungstemperatur liegt. Um zu vermeiden, daß während der Freisetzung von Schwefeldioxid von der Schwefelfalle auch noch Stickoxide vom Speicherkatalysator freigesetzt werden können, ist vorgesehen, daß die Entschwefelung der Schwefelfalle durch Anheben der Abgastemperatur erst nach Abschluß eines Stickoxid-Speicherzyklus, das heißt bei regeneriertem Speicherkatalysator, eingeleitet wird.

In den Figuren 4 bis 6 sind die Temperaturverhältnisse für eine bevorzugte Ausführungsform des erfindungsgemäßen Verfahrens dargestellt. Die Positionierung von Schwefelfalle und Speicherkatalysator in der Abgasanlage sowie die Auswahl der Speichermaterialien für Schwefelfalle und Speicherkatalysator erfolgt dabei so, daß während der Entschwefelung der Schwefelfalle die Abgastemperatur vor dem Speicherkatalysator oberhalb des Aktivitätsfensters des Speicherkatalysators liegt. Zwischen der Entschwefelungstemperatur $T_{S,DeSOx}$, der Temperaturdifferenz $\Delta T_{S,K}$ zwischen den Abgastemperaturen $T_S$ vor der Schwefelfalle und $T_K$ vor dem Speicherkatalysator und der oberen Grenztemperatur $T_{K,2}$ des Aktivitätsfensters des Speicherkatalysators besteht dann die folgende Beziehung:

$$T_{K,2} + \Delta T_{S,K} > T_{S,DeSOx}$$

Unter diesen Bedingungen ist sichergestellt, daß während der Desorption des Schwefeldioxids von der Schwefelfalle keine gespeicherten Stickoxide mehr auf dem Speicherkatalysator vorliegen. Damit wird eine erneute Oxidation der desorbierten Schwefelkomponenten (Schwefeldioxid und Schwefelwasserstoff) zu Schwefeltrioxid durch Reaktion mit Stickoxiden und Abspeicherung auf dem Speicherkatalysator sicher verhindert. Es findet allenfalls eine vernachlässigbare zeitliche Überlappung der Freisetzung von Schwefeldioxid und Stickstoffdioxid statt.

Das für das erfindungsgemäße Verfahren wichtige Anheben der Motoraustrittstemperatur kann durch geeignete Änderung der Betriebsparameter des Motors ohne merkliche Änderung des Drehmomentes vorgenommen werden, so daß hierunter der Fahrkomfort nicht leidet.

Die geschilderten Verfahrensschritte a) und b) werden zyklisch wiederholt. Die Anzahl der Stickoxid-Speicherzyklen (Verfahrensschritte a)) zwischen zwei Entschwefelungen der Schwefelfalle (Verfahrensschritte b)) liegt im allgemeinen zwischen 10 und 100000. Die tatsächlich angewendete Zahl $N_1$ hängt von zahlreichen Parametern wie Schwefelgehalt im Kraftstoff, Volumina von Schwefelfalle und Speicherkatalysator, Mageranteile während des praktischen Fahrbetriebs, Motorentyp, Betriebsweise des Fahrzeugs (Autobahn oder Stadtverkehr) und von den vom jeweiligen Fahrzeughersteller bereitgestellten Möglichkeiten der Aufheizung des Abgases ab. $N_1$ sollte möglichst groß gewählt werden, um den für die Aufheizung der Schwefelfalle benötigten zusätzlichen Kraftstoffverbrauch so gering wie möglich zu halten.

Während des Betriebs einer Brennkraftmaschine an einem Kraftfahrzeug kommt es bei Beschleunigungen und auch im Vollastbereich zu sogenannten natürlichen Anfettungsphasen, die den erfindungsgemäßen Verfahrensablauf unterbrechen. Da während dieser Betriebsphasen die Speicherung von Schwefeloxiden auf der Schwefelfalle weiterläuft, werden auch diese natürlichen Anfettungsphasen zu $N_1$ hinzuaddiert.

Speichermaterialien für Schwefeloxide weisen eine hohe Effizienz auf. Trotzdem kann es aufgrund eines geringen Schlupfes von Schwefeloxiden zu einer langsamen Beladung des Speicherkatalysators mit Sulfaten kommen, die die Speicherkapazität für die Stickoxide vermindert. Deshalb wird in einer bevorzugten Ausführungsform des erfindungsgemäßen Verfahrens ein zusätzlicher Verfahrensschritt b') zur Entschwefelung des Speicherkatalysators nach jeweils einer vorgegebenen Anzahl $N_2$ von Stickoxid-Speicherzyklen vorgesehen. Die für die Stickoxidspeicherung üblicherweise verwendeten Alkali- und Erdalkalimetalloxide bilden Sulfate mit einer sehr hohen Entschwefelungstemperatur $T_{K,DeSOx}$. Die Motoraustrittstemperatur der Abgase muß daher in diesem Verfahrensschritt noch über $T_{M,2}$ auf den Wert $T_{M,3}$ angehoben werden, um die Abgastemperatur vor dem Speicherkatalysator $T_K$ trotz seiner relativ großen Entfernung vom Motoraustritt über seine Entschwefelungstemperatur $T_{K,DeSOx}$ anzuheben. Während der Entschwefelung des Speicherkatalysators wird die Luftzahl des Abgases wieder unter den Wert 1 abgesenkt.

Die Entschwefelung des Speicherkatalysators muß bei einwandfreier Funktion der verwendeten Komponenten relativ selten durchgeführt werden. Typischerweise werden 2 bis 100 Entschwefelungen der Schwefelfalle vorgenommen, bevor eine Entschwefelung des Speicherkatalysators notwendig wird, das heißt die Anzahl $N_2$ der Stickoxid-Speicherzyklen zwischen zwei Entschwefelungen des Speicherkatalysators ist um den Faktor 2 bis 100 größer als $N_1$.

Zur Entschwefelung von Schwefelfalle und gegebenenfalls Speicherkatalysator wird die Luftzahl des Abgases auf einen Wert zwischen 0,96 und 1,01, bevorzugt zwischen 0,97 und 1,0 abgesenkt. Alternativ hierzu kann zur Entschwefelung von Schwefelfalle und gegebenenfalls des Speicherkatalysators die Luftzahl des Abgases auch auf einen Wert zwischen 0,6 und 0,8 abgesenkt werden. In diesem Fall wird von der Schwefelfalle überwiegend Schwefelwasserstoff freigesetzt. Um die Emission von Schwefelwasserstoff in die Umwelt zu unterdrücken, kann während der Entschwefelung der Schwefelfalle Sekundärluft in die Abgasanlage zugegeben und dadurch die Luftzahl bei Eintritt in den Speicherkatalysator auf einen Wert zwischen 0,98 und 1,01 angehoben werden.

In Figur 4 ist angenommen, daß die Schwefelfalle dieselbe Entschwefelungstemperatur wie der Speicherkatalysator aufweist. Durch die Anordnung der Schwefelfalle auf halbem Weg zwischen Motor und Speicherkatalysator kann jedoch die Motoraustrittstemperatur $T_{M,2}$ für die Entschwefelung wesentlich niedriger gehalten werden als bei Anordnung der Schwefelfalle direkt vor dem Speicherkatalysator.

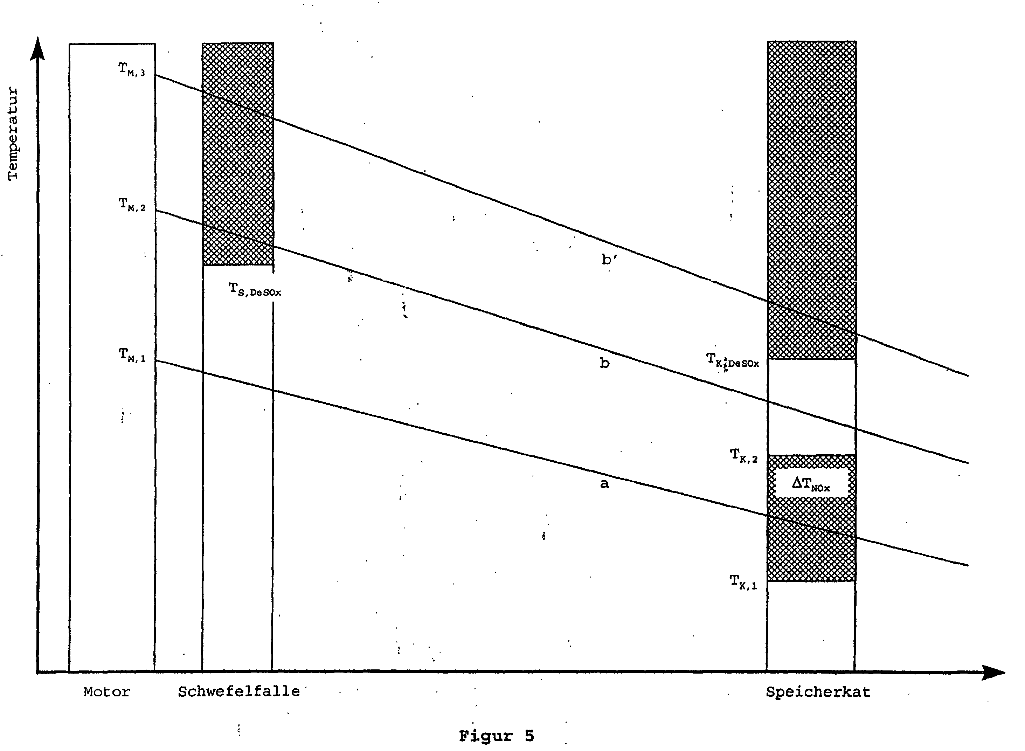

Figur 5 zeigt die Temperaturverhältnisse bei Anordnung der Schwefelfalle direkt hinter dem Motor. In diesem Fall kann für die Schwefelfalle ein Speichermaterial mit einer hohen' Entschwefelungstemperatur gewählt werden, ohne daß zur Entschwefelung der Schwefelfalle die Motoraustrittstemperatur $T_{M,2}$ über die von Figur 4 angehoben werden müßte.

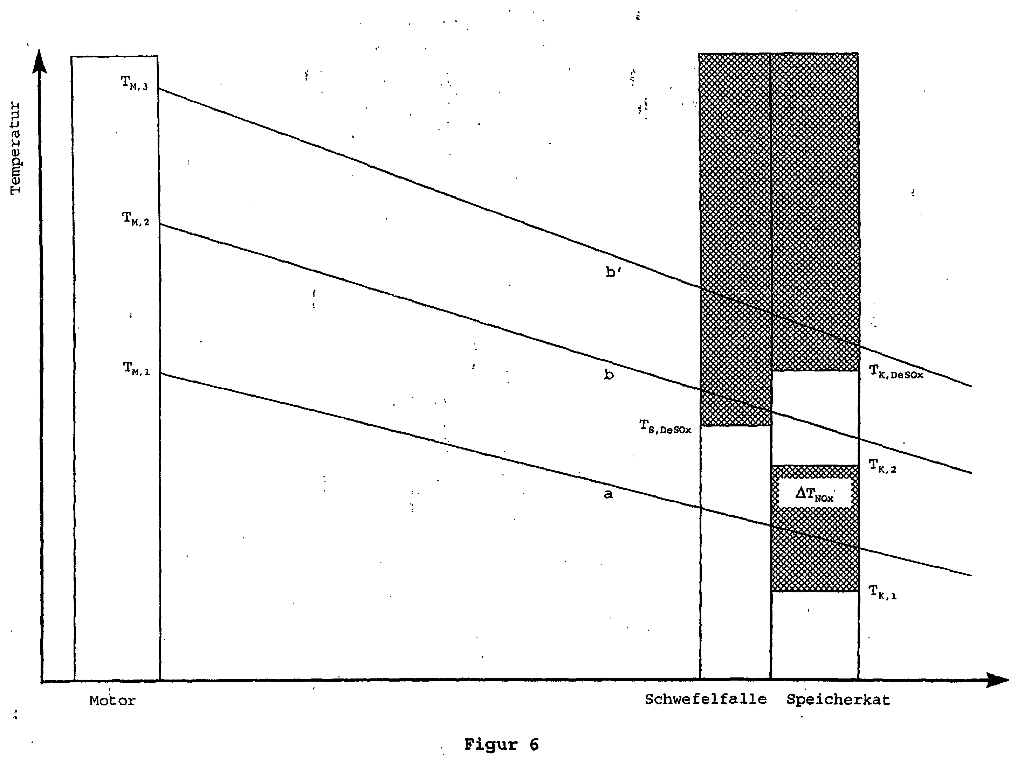

Figur 6 zeigt die Anordnung der Schwefelfalle unmittelbar vor dem Speicherkatalysator. Zur Durchführung des erfindungsgemäßen Verfahrens ist es für diese Anordnung notwendig, ein Speichermaterial für die Schwefelfalle auszuwählen, dessen Entschwefelungstemperatur geringer ist als die des Speicherkatalysators. Ein solches Material wäre für die motornahe Anordnung der Schwefelfalle von Figur 5 völlig ungeeignet, da seine Entschwefelungstemperatur noch unterhalb der Motoraustrittstemperatur $T_{M,1}$ für den normalen Teillastbetrieb liegt. Die Schwefelfalle von Figur 6 könnte in der Anordnung nach Figur 5 nicht wirkungsvoll als Schwefelfalle eingesetzt werden.

Die Diagramme der Figuren 4 bis 6 machen klar, daß je nach Anordnung von Schwefelfalle und Speicherkatalysator in der Abgasanlage die verwendeten Materialien in geeigneter Weise aufeinander abgestimmt werden müssen.

Für den Stickoxid-Speicherkatalysator werden bevorzugt die bekannten Speicherkomponenten verwendet. Es handelt sich hierbei um Verbindungen von Lithium, Natrium, Kalium, Cäsium, Rubidium, Kalzium, Strontium, Barium, Lanthan und Yttrium. Als katalytisch aktive Komponente kommt wenigsten ein Metall der Platingruppenelemente Platin, Palladium, Rhodium und Iridium zur Anwendung.

Die Anforderungen an die Speichermaterialien für die Schwefelfalle bei Anwendung des erfindungsgemäßen Verfahrens sind

- hohe Speicherkapazität für Schwefeloxide
- möglichst hohe Zersetzungsrate für die gespeicherten Sulfate oberhalb der Entschwefelungstemperatur

Diese Anforderungen werden nicht von allen aus dem Stand der Technik bekannten Speichermaterialien erfüllt.

Geeignet für das erfindungsgemäße Verfahren sind Schwefeloxid-Speicherkomponenten aus Verbindungen der Erdalkalimetalle Magnesium, Kalzium, Strontium und Barium sowie Lanthan. Diese Materialien können je nach den Temperaturanforderungen für die Entschwefelung und den geforderten Speicherkapazitäten einzeln oder auch in Mischung eingesetzt werden.

Als besonders geeignet für das Verfahren haben sich Speicherkomponenten auf Basis von Mg/Al-Hydrotalcit erwiesen. Hierbei handelt es sich um ein doppelschichtiges Hydroxid des Magnesiumoxids und Aluminiumoxids. Kommerziell erhältliches Mg/Al-Hydrotalcit wird mit molaren Verhältnissen von Magnesiumoxid zu Aluminiumoxid zwischen 1 und 6 geliefert. Die Herstellung von synthetischem Hydrotalcit wird zum Beispiel in der WO 96/05140-beschrieben.

Vor der Verwendung als Schwefelfalle ist es zweckmäßig, den Mg/Al-Hydrotalcit bei Temperaturen von 400 bis 600°C für die Dauer von 1 bis 10 Stunden an Luft zu kalzinieren. Seine spezifische Oberfläche (BET-Oberfläche, gemessen nach DIN 66132) liegt im Bereich zwischen 100 $m^2$/g und 300 $m^2$/g.

Durch die Kalzinierung bildet sich der Mg/Al-Hydrotalcit in Mg/Al-Spinell ($MgO \cdot Al_2O_3$) um. Das im stöchiometrischen Überschuß vorhandene Magnesiumoxid ist im gebildeten Spinell homogen verteilt und stabilisiert seine spezifische Oberfläche. Die Umwandlung des Hydrotalcits in Spinell kann auch in der fertigen Schwefelfalle durch die heißen Abgase erfolgen. Im Sinne einer reproduzierbaren Fertigung ist jedoch eine Kalzinierung des Hydrotalcits vor der Verwendung als Schwefelfalle zu empfehlen.

Mg/Al-Hydrotalcit kann in einer Menge von 0,5 bis 40 Gew.-%, bezogen auf sein Gesamtgewicht, mit wenigstens einem Element aus der Gruppe, welche aus den Erdalkalielementen Kalzium, Strontium, Barium und den Seltenerdoxiden gebildet wird, dotiert werden. Hierdurch kann die Entschwefelungstemperatur des Materials in bestimmten Grenzen verschoben und somit den Anforderungen des Verfahrens angepaßt werden.

Die Dotierung kann vor oder nach der Kalzinierung des Hydrotalcits vorgenommen werden. Bevorzugt werden die Dotierungselemente durch Imprägnieren mit löslichen Vorstufen der Dotierungselemente in den Hydrotalcit beziehungsweise in den Spinell eingebracht.

Ungeeignete Materialien für das erfindungsgemäße Verfahren sind das häufig im Stand der Technik eingesetzte Eisenoxid, Manganoxid und Ceroxid. Eisenoxid hat eine ungenügende Speicherkapazität und eine nicht ausreichende Temperaturstabilität. Manganoxid weist einen sehr breiten Entschwefelungsbereich auf, der schon bei relativ niedrigen Temperaturen einsetzt. Gleiches gilt für Ceroxid. Eine eindeutige Trennung der Entschwefelung der Schwefelfalle vom Aktivitätsfenster üblicher Speicherkatalysatoren, wie es vom vorgestellten Verfahren gefordert wird, ist mit diesen Materialien kaum möglich.

Die für die Abspeicherung der Schwefeloxide notwendige Oxidation zu Schwefeltrioxid kann direkt an der Schwefelfalle erfolgen. Hierzu kann die Schwefelfalle zum Beispiel mit wenigstens einem Metall der Platingruppenelemente Platin, Palladium, Rhodium und Iridium unter Anwendung bekannter Techniken versehen werden.

In speziellen Anwendungsfällen kann es vorteilhaft sein, als Schwefelfalle einen konventionellen Abgaskatalysator zu verwenden, der durch Hinzufügen der entsprechenden Speicherkomponenten auch Schwefeloxide speichern kann (siehe Beispiel 6). Hierbei können alle dem Fachmann bekannten Maßnahmen und Materialien wie zum Beispiel Einschicht- oder Mehrschichtkatalysatoren zum Einsatz kommen. Die Schwefelfalle kann dann die am Stickoxid-Speicherkatalysator ablaufenden Umsetzungen von Kohlenmonoxid, Kohlenwasserstoffen und Stickoxiden unterstützen und zudem während des Warmlaufs des Motors bzw. der Brennkraftmaschine die Funktion eines Startkatalysators übernehmen.

Eine weitere vorteilhafte Ausgestaltung des erfindungsgemäßen Verfahrens besteht darin, eine edelmetallfreie Schwefelfalle einzusetzen und ihr einen edelmetallhaltigen Katalysator im Abgasstrom vorzuschalten. Auf diese Weise erfolgt die Oxidation der Schwefeloxide zu Schwefeltrioxid an dem vorgeschalteten Katalysator, während die Schwefelfalle lediglich das so gebildete Schwefeltrioxid aufnimmt.

Die Schwefelfalle wird unter Anwendung der bekannten Techniken bei der Herstellung von Autoabgaskatalysatoren hergestellt. Bevorzugt wird das Speichermaterial in Form einer Beschichtung auf die Strömungskanäle von Wabenkörpern aus Keramik oder Metall aufgebracht. Hierzu kann das Material in feinteiliger oxidischer Form, gegebenenfalls in Mischung mit anderen aus der Autoabgaskatalyse bekannten Trägermaterialien (aktives Aluminiumoxid, Zirkonoxid, Titanoxid), zu einer wäßrigen Beschichtungsdispersion verarbeitet und durch Tauchen auf die Wabenkörper aufgetragen werden. Diese Vorgehensweise kommt insbesondere bei Mg/Al-Hydrotalcit zur Anwendung. Alternativ hierzu können die Speichermaterialien auch in Form ihrer löslichen Vorstufen auf hochoberflächige Trägermaterialien zum Beispiel durch Imprägnieren aufgebracht werden. Dies kann vor oder nach dem Aufbringen der Trägermaterialien auf die Wabenkörper geschehen. Ebenso werden die katalytisch aktiven Komponenten (Platin, Palladium, Rhodium, Ruthenium, Iridium, Osmium) in die Schwefelfalle eingebracht. Die Schwefelfalle kann weiterhin mit Promotoren aus der Gruppe der Übergangsmetalloxide versehen werden. Geeignete Übergangsmetalle, die die katalytische Funktion der Schwefelfalle unterstützen, sind Zink, Nickel, Chrom, Kobalt, Kupfer und Silber.

Im erfindungsgemäßen Verfahren können also Schwefelfallen eingesetzt werden, die aus mehreren Komponenten bestehen. Eine bevorzugte Schwefelfalle besteht zum Beispiel aus einer Mischung aus Aluminiumoxid und Mg/Al-Hydrotalcit beziehungsweise Mg/Al-Spinell mit überschüssigem Magnesiumoxid. Außerdem kann der Spinell noch mit Erdalkalielementen dotiert sein. Prinzipiell ist jede dieser Komponenten in der Lage, Schwefeltrioxid in Form von Sulfaten zu binden.

Wird zum Beispiel Aluminiumoxid als einziges Material eingesetzt, so werden die Schwefelkomponenten in Form von Aluminiumsulfat gebunden. Hierdurch verringert sich jedoch die spezifische Oberfläche des Aluminiumoxids stark. Dies hat zur Folge, daß die Bildungsrate von Aluminiumsulfat mit zunehmender Alterung der Schwefelfalle zurückgeht. Durch Mischen des Aluminiumoxids mit zum Beispiel Magnesiumoxid oder Bariumoxid kann dieser Alterungsprozeß weitgehend verhindert werden, da sich in diesem Fall bevorzugt die stabileren Erdalkalisulfate bilden.

In den folgenden Beispielen und Vergleichsbeispielen wurden unterschiedliche Formulierungen von Schwefelfallen auf keramischen Wabenkörpern hergestellt und miteinander verglichen. Um die Vergleichbarkeit der verschiedenen Formulierungen zu gewährleisten, wurden die Mengen der einzelnen Komponenten jeweils so bemessen, daß die theoretische Gesamtspeicherkapazität der Schwefelfallen in allen Beispielen etwa 4,7 Mol Sulfat pro Liter der fertigen Schwefelfallen betrug. Hierzu wurde angenommen, daß Aluminiumoxid vollständig in Aluminiumsulfat und Magnesiumoxid vollständig in Magnesiumsulfat überführt werden kann. Ebenso wurde bei den Dotierungselementen vorgegangen. Die jeweilige Menge der Dotierungselemente wurde so bemessen, daß ihre theoretische Speicherkapazität 0,17 Mol Schwefel pro Liter betrug. Die Speicherkapazität des Spinells wurde als Summe der Speicherkapazitäten der in ihm enthaltenen Anteile an Magnesiumoxid und Aluminiumoxid berechnet.

Bei allen Schwefelfallen wurde als Edelmetallkomponente Platin verwendet.

### Beispiel 1

Es wurde eine wäßrige Dispersion von $\gamma$-$Al_2O_3$ (Partikelgröße 4 $\mu$m ($d_{50}$) und Mg/Al-Hydrotalcit (Partikelgröße 4 $\mu$m ($d_{50}$)) mit einem Gewichtsverhältnis $\gamma$-$Al_2O_3$ zu Mg/Al-Hydrotalcit von 3:14 angefertigt. Der Mg/Al-Hydrotalcit besaß ein Molverhältnis MgO/$Al_2O_3$ von 2,6 und wurde in einer Vorbehandlung bei 550°C für die Dauer von 4 Stunden an Luft kalziniert. Danach besaß das Material noch eine spezifische Oberfläche von 200 $m^2$/g.

Es wurden mehrere Wabenkörper aus Cordierit mit einer Zelldichte von 62 $cm^{-2}$ durch Tauchen in diese Dispersion mit insgesamt 170 g Trockenmasse pro Liter Wabenkörpervolumen beschichtet (140 g/l Hydrotalcit und 30 g/l $\gamma$-$Al_2O_3$). Die Beschichtung wurde bei 120°C getrocknet und 2 Stunden bei 500°C an Luft kalziniert. Anschließend wurden die beschichteten Wabenkörper durch Tauchen in eine wäßrige Lösung von Platintetraamminnitrat Pt(NH$_3$)$_4$ (NO$_3$)$_2$ imprägniert, bei 120°C getrocknet und bei 500°C für 2 Stunden an Luft kalziniert. Die fertigen Schwefelfallen enthielten 2 g Platin pro Liter Wabenkörper.

### Beispiel 2

Eine in Beispiel 1 hergestellte Schwefelfalle wurde durch Tauchen in eine wäßrige Lösung von Kalziumnitrat, Trocknen bei 120°C und Kalzinieren bei 500°C an Luft mit 10 g Kalziumoxid pro Liter Volumen der Schwefelfalle beladen.

### Beispiel 3

Eine weitere in Beispiel 1 hergestellte Schwefelfalle wurde durch Tauchen in eine wäßrige Lösung von Strontiumacetat, Trocknen bei 120°C und Kalzinieren bei 500°C an Luft mit 17,5 g Strontiumoxid pro Liter beladen.

### Beispiel 4

Eine weitere in Beispiel 1 hergestellte Schwefelfalle wurde durch Tauchen in eine wäßrige Lösung von Bariumacetat, Trocknen bei 120°C und Kalzinieren bei 500°C an Luft mit 26,0 g Bariumoxid pro Liter beladen.

### Beispiel 5

Eine weitere in Beispiel 1 hergestellte Schwefelfalle wurde durch Tauchen in eine wäßrige Lösung von Lanthanacetat, Trocknen bei 120°C und Kalzinieren bei 500°C an Luft mit 18,5 g Lanthanoxid pro Liter beladen.

### Beispiel 6

100 g $\gamma$-Al$_2$O$_3$ (spezifische Oberfläche 140 m$^2$/g) wurden durch Imprägnieren mit einer wäßrigen Lösung von Rhodiumnitrat Rh(NO$_3$)$_3$, Trocknen bei 120°C und Kalzinieren bei 500°C an Luft mit 3 g Rhodium beladen. Das auf diese Weise hergestellte Rh/Al$_2$O$_3$-Pulver wurde in Wasser eingerührt und auf eine Partikelgröße von 4 $\mu$m (d$_{50}$) gemahlen.

Eine weitere der in Beispiel 1 hergestellten Schwefelfallen wurde durch Tauchen in die Dispersion von Rh/Al$_2$O$_3$ mit 30 g Rh/Al$_2$O$_3$ pro Liter Wabenkörpervolumen beladen. Die so behandelte Schwefelfalle wurde bei 120°C getrocknet und bei 500°C an Luft kalziniert.

### Vergleichsbeispiel 1

Zur Herstellung einer konventionellen Schwefelfalle wurde eine wäßrige Dispersion von $\gamma$-Al$_2$O$_3$ (Oberfläche 140 m$^2$/g, Partikelgröße d$_{50}$ = 4 $\mu$m) angefertigt und ein weiterer Wabenkörper aus Cordierit durch Tauchen in diese Dispersion mit 170 g $\gamma$-Al$_2$O$_3$ pro Liter Wabenkörpervolumen beschichtet. Die Beschichtung wurde bei 120°C getrocknet und 2 Stunden bei 500°C an Luft kalziniert.

Die Beschichtung wurde mit einer wäßrigen Lösung von Platintetraamminnitrat imprägniert, erneut bei 120°C getrocknet und bei 500°C für die Dauer von 2 Stunden an Luft kalziniert. Die fertige Beschichtung enthielt 2 g Platin pro Liter des Wabenkörpervolumens. Im Anschluß daran wurde die Beschichtung durch erneutes Tauchen in eine wäßrige Lösung von Eisen(III)nitrat imprägniert, bei 120°C getrocknet und bei 500°C an Luft kalziniert. Die kalzinierte Beschichtung enthielt Eisen in einer Menge von 9,1 g pro Liter, berechnet als Eisen(III)oxid.

### Vergleichsbeispiel 2

Es wurde eine weitere konventionelle Schwefelfalle nach Vergleichsbeispiel 1 hergestellt. Im Unterschied zu Vergleichsbeispiel 1 wurde die Beschichtung nicht mit Eisennitrat, sondern mit Manganacetat imprägniert. Die fertige Schwefelfalle enthielt Mangan in einer Menge von 14,8 g pro Liter Wabenkörpervolumen, berechnet als Mangan(IV) oxid.

### Vergleichsbeispiel 3

Es wurde eine weitere konventionelle Schwefelfalle nach Vergleichsbeispiel 1 hergestellt. Im Unterschied zu Vergleichsbeispiel 1 wurde die Beschichtung nicht mit Eisennitrat sondern mit Cernitrat imprägniert. Die fertige Schwefelfalle enthielt Cer in einer Menge von 29,2 g pro Liter Wabenkörpervolumen, berechnet als Cer(IV)oxid.

Die Zusammensetzung der in den vorstehenden Beispielen angefertigten Schwefelfallen sind in Tabelle 1 zusammengefaßt.

### Anwendungsbeispiel

Für den wirkungsvollen Einsatz einer Schwefelfalle im erfindungsgemäßen Verfahren ist ihre Speicherkapazität unter mageren Abgasbedingungen, die Vermeidung von Sekundäremissionen bei der Freisetzung des gespeicherten Schwefels in Form von Schwefelwasserstoff H$_2$S und Karbonylsulfid COS sowie die Entschwefelungstemperatur T$_{S,DeSOx}$ und die Freisetzungsrate für die Schwefeloxide in Abhängigkeit von Abgastemperatur und Luftzahl des Abgases von Bedeutung.

Zur Beurteilung der Schwefelfallen gemäß der Beispiele 1 bis 5 sowie der Vergleichsbeispiele 1 bis 3 wurden daher folgende Untersuchungen durchgeführt:

Die in den Beispielen beschriebenen Schwefelfallen wurden zunächst für 5 Stunden an einem mageren Ottomotor, welcher bei einer Luftzahl von 1,5 betrieben wurde unter Verwendung von Kraftstoff mit 400 Gew.-ppm Schwefelgehalt mit Schwefel beladen. Die Abgastemperatur vor der Schwefelfalle betrug dabei 400°C. Die eingesetzten Schwefelfallen hatten ein Volumen von jeweils 0,8 Liter. Der Durchsatz des Abgases betrug 42000 Nl/h.

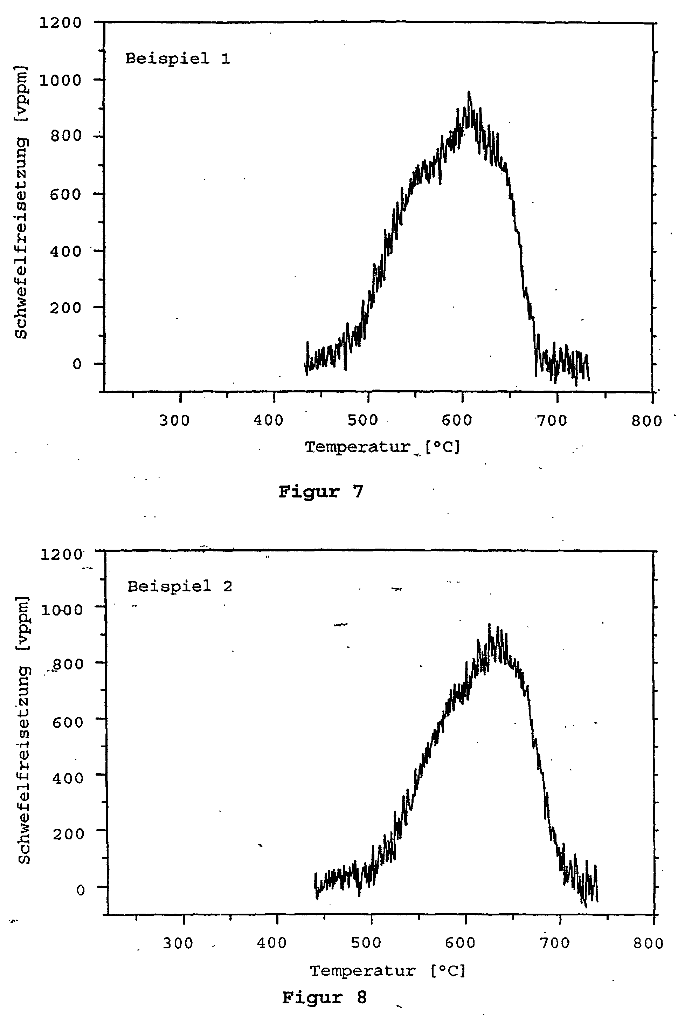

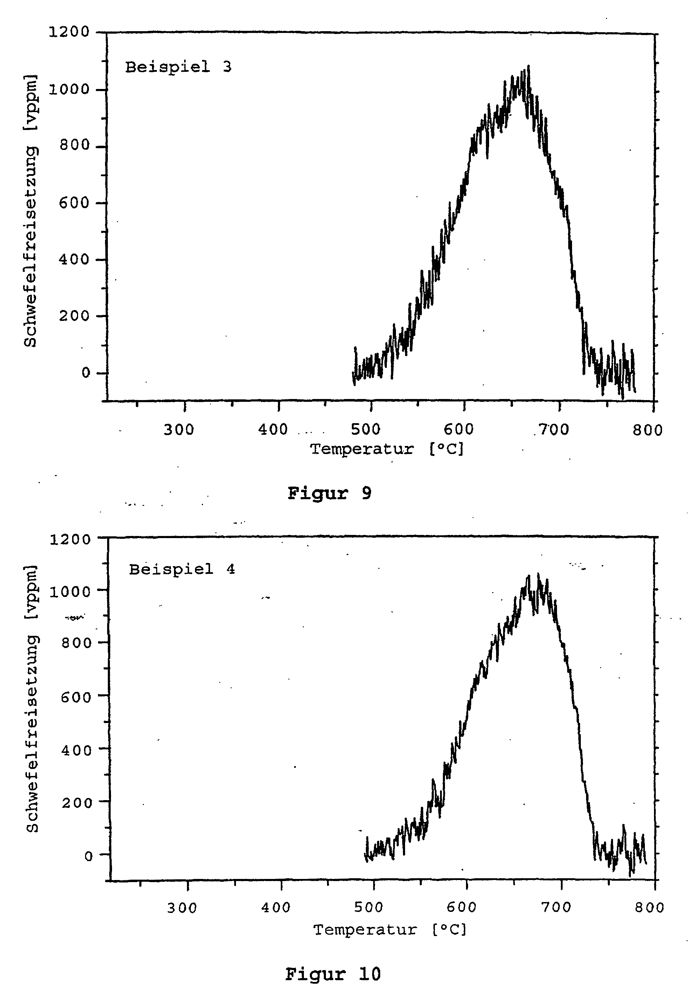

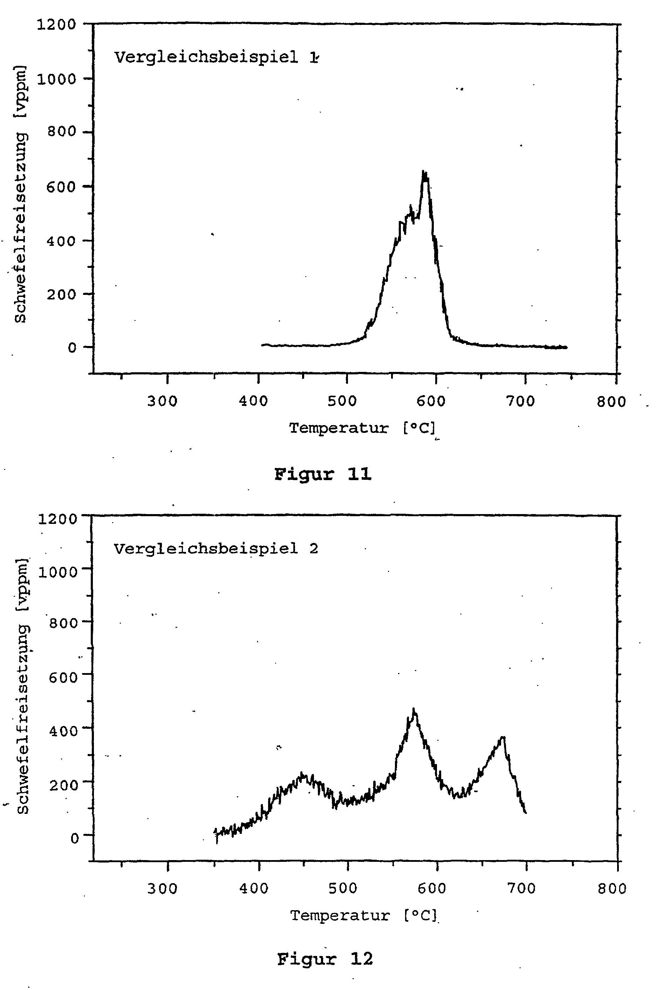

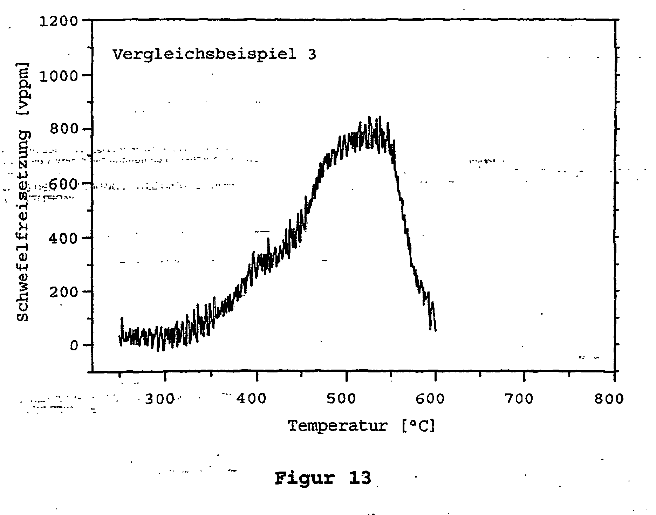

Zunächst wurden die Rohemissionen des Motors an Schwefeldioxid, Schwefelwasserstoff und Karbonylsulfid mit einem Ionen-Molekülreaktionsmassenspektrometer (IMR-MS) ermittelt. Nach Einbau der jeweiligen Schwefelfalle in die Abgasanlage wurden der zeitliche Verlauf der Emissionen hinter der Schwefelfalle gemessen. Aus diesen Meßwerten wurden sowohl die vom Motor emittierte Schwefelmenge als auch die von den Schwefelfallen aufgenommenen Schwefelmengen durch Integration über der Zeit berechnet. Anschließend wurden die Schwefelfallen bei einer Luftzahl von 0,98 langsam auf 750°C aufgeheizt. Mit Hilfe des IMR-MS wurden die von den Schwefelfallen abgegebenen Konzentrationen an Schwefeldioxid, Schwefelwasserstoff und Karbonylsulfid im Abgasstrom während des Aufheizvorganges in Abhängigkeit von Zeit und Temperatur bestimmt. Die Ergebnisse der Untersuchungen sind in der nachfolgenden Tabelle 2 sowie in den Figuren 7 bis 13 dargestellt.

Die Messungen zeigen, daß von den Schwefelfallen der Beispiele 1 bis 4 während der Magerlaufzeit die vom Motor emittierten Schwefelmengen annähernd quantitativ aufgenommen wurden. Während der Entschwefelung im fetten Abgas konnte der Schwefel wieder weitgehend quantitativ freigesetzt werden. Das Vergleichsbeispiel 1 zeigt dagegen eine deutlich niedrigere Schwefelaufnahme. Die Entschwefelung verläuft allerdings auch hier annähernd quantitativ. Vergleichsbeispiel 2 zeigt einen sehr breiten Desorptionsbereich für den Schwefel, der ein schnelles Entschwefeln der Schwefelfalle nicht zuläßt. Außerdem beginnt die Entschwefelung ebenso wie bei Vergleichsbeispiel 3 schon bei sehr niedrigen Temperaturen. Eine Überlappung der Schwefelfreisetzung mit dem Aktivitätsfenster üblicher Speicherkatalysatoren kann damit nicht verhindert werden.

Tabelle 1: Zusammensetzung der Schwefelfallen

| Beispiel | $\gamma$-Al$_2$O$_3$ [g/l] | Hydrotalcit [g/l] | Dotierung | | Platin [g/l] |
|---|---|---|---|---|---|
| | | | Material | [g/l] | |
| B1 | 30 | 140 | -- | -- | 2 |
| B2 | 30 | 140 | CaO | 10 | 2 |
| B3 | 30 | 140 | SrO | 17,5 | 2 |
| B4 | 30 | 140 | BaO | 26 | 2 |
| B5 | 30 | 140 | La$_2$O$_3$ | 18,5 | 2 |
| B6 | 30 + 30 g Rh/Al$_2$O$_3$ | 140 | -- | -- | 2 + 0,9 g Rh |
| VB1 | 160 | | Eisenoxid | 9,1 | 2 |
| VB2 | 160 | | Manganoxid | 14,8 | 2 |
| VB3 | 160 | | Ceroxid | 19,5 | 2 |

Tabelle 2: Meßergebnisse

| Beispiel | Emittierter Schwefel als SO$_2$ [g] | freigesetzter Schwefel in [g] als | | | SO$_2$ / H$_2$S / COS Desorption [°C] | |
|---|---|---|---|---|---|---|
| | | SO$_2$ [g] | H$_2$S [g] | COS [g] | $T_{S,DeSOx}$ | $T_{End}$ |
| B1 | 4,53 | 4,11 | 0,02 | nicht meßbar | 475 | 675 |
| B2 | 4,49 | 3,93 | 0,03 | nicht meßbar | 500 | 700 |
| B3 | 4,65 | 4,61 | 0,01 | nicht meßbar | 520 | 730 |
| B4 | 4,43 | 4,32 | 0,01 | nicht meßbar | 550 | 735 |
| VB1 | 4,46 | 1,33 | 0,03 | nicht meßbar | 520 | 610 |
| VB2 | 4,61 | 2,47 | 0,02 | nicht meßbar | 400 | 700 |
| VB3 | 4,55 | 4,41 | 0,01 | nicht meßbar | 350 | 600 |

Die letzten beiden Spalten von Tabelle 2 geben die Temperatur des Abgases bei Beginn der Entschwefelung $T_{S,DeSOx}$ sowie die Endtemperatur $T_{End}$ nach Abschluß der Entschwefelung an. Die Differenz zwischen beiden sollte möglichst gering sein, um eine schnelle Entschwefelung der Schwefelfalle zu gewährleisten. Bei den erfindungsgemäßen Beispielen 1 bis 4 liegt die Temperaturdifferenz bei 200, 210 und 185°C. Bei den Vergleichsbeispielen VB2 und VB3 wurden Werte von 300 und 250°C gemessen. Die Temperaturdifferenz in Vergleichsbeispiel 1 beträgt nur 90°C.

Die Untersuchungen zeigen weiterhin, daß die Sekundäremissionen an Schwefelwasserstoff und Karbonylsulfid bei dem für die Entschwefelung gewählten Wert der Luftzahl von 0,98 bei allen Beispielen und Vergleichsbeispielen nur Bruchteile der Schwefeldioxid-Emissionen darstellen.

Entscheidend für den Einsatz der oben beschriebenen Formulierungen als Schwefelfalle gemäß der vorliegenden Erfindung ist der Temperaturbereich, in dem diese Schwefelfallen bei Anfettung die gespeicherten Sulfate wieder freisetzen. Gemäß der vorliegenden Erfindung muß dieser Temperaturbereich oberhalb des im zyklischen mager/fett Betrieb genutzten Aktivitätsfensters des Speicherkatalysators zuzüglich der zwischen Schwefelfalle und Speicherkatalysator herrschenden Temperaturdifferenz des Abgases liegen.

Diese Bedingung ist für die Schwefelfallen der Beispiele 1 bis 5 erfüllt.

Die Entschwefelung der Schwefelfalle bzw. des Speicherkatalysators verursacht einen zusätzlichen Kraftstoffverbrauch, um die Abgasanlage mit Schwefelfalle und Speicherkatalysator auf die für die Entschwefelung notwendigen Temperaturen zu bringen und um eine hinreichend hohe Menge an reduzierenden Bestandteilen im Abgas für die Reduktion der gespeicherten Sulfate bereitzustellen. Zur Verringerung des zusätzlichen Kraftstoffverbrauchs sollte die Entschwefelung bei möglichst niedrigen Temperaturen in kurzer Zeit erfolgen, um die auftretenden Wärmeverluste gering zu halten.

Bei der Entschwefelung sollten die Sekundäremissionen an Schwefelwasserstoff und Karbonylsulfid gering gehalten werden. Die Sekundäremissionen hängen im wesentlichen von der für die Entschwefelung verwendeten Luftzahl des Abgases ab. Wie die folgenden Untersuchungen zeigen, gibt es zwei bevorzugte Bereiche der Luftzahl für die Entschwefelung. Der erste Bereich liegt nahe am stöchiometrischen Punkt zwischen etwa 0,97 und 1,0, der zweite zwischen 0,6 und 0,8.

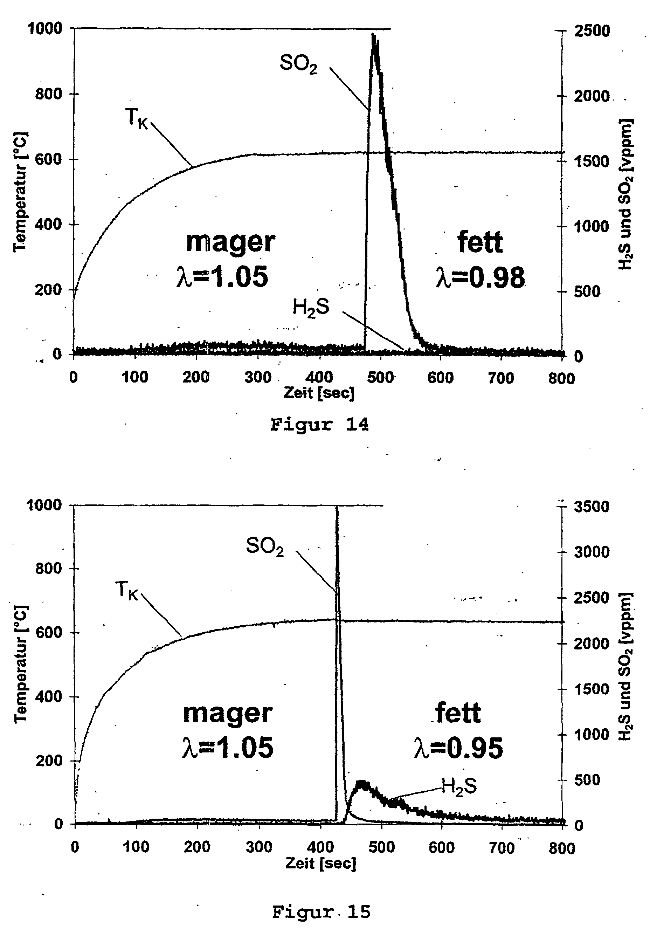

Zur Bestimmung der für die Entschwefelung benötigten Zeit wurde ein Exemplar der Schwefelfallen von Beispiel 1 wie zuvor an einem mager betriebenen Ottomotor bei 400°C für die Dauer von 5 Stunden unter Verwendung von Kraftstoff mit einem Schwefelgehalt von 400 Gew.-ppm mit Schwefel beladen. Das Volumen der Schwefelfalle betrug 0,8 Liter. Anschließend wurde die Abgastemperatur bei einer Luftzahl von 1,05 bis auf eine Temperatur von 640°C aufgeheizt. Nach Erreichen dieser Temperatur wurde die Luftzahl auf einen Wert von 0,98 und in einem zweiten Durchgang auf einen Wert von 0,95 abgesenkt. Der Volumenstrom des Abgases betrug dabei etwa 102000 Nl/h. Das Entschwefelungsverhalten ist in den Figuren 14 und 15 in Abhängigkeit von der Zeit dargestellt.

Wird die Entschwefelung bei einer Luftzahl von 0,95 (Figur 15) durchgeführt, sc gibt die Schwefelfalle einen großen Teil der Sulfate zunächst innerhalb einer kurzen Zeit in Form von Schwefeldioxid frei. Allerdings wird ein erheblicher Teil des gespeicherten Schwefels in Form von Schwefelwasserstoff über einen längeren Zeitraum emittiert. Diese langsame Freisetzung von Schwefelwasserstoff ist verantwortlich dafür, daß für die Entschwefelung eine relativ lange Zeit benötigt wird.

Wird die Entschwefelung dagegen bei einer Luftzahl von 0,98 (Figur 14) durchgeführt, so wird der Schwefel ausschließlich in Form von Schwefeldioxid freigesetzt. Die Freisetzung des Schwefeldioxids dauert hierbei zwar länger als bei λ=0,95, das Fehlen einer zeitlich stark ausgedehnten Freisetzung von Schwefelwasserstoff führt aber dazu, daß die Dauer der Entschwefelung im Falle von λ=0,98 insgesamt deutlich kürzer ist.

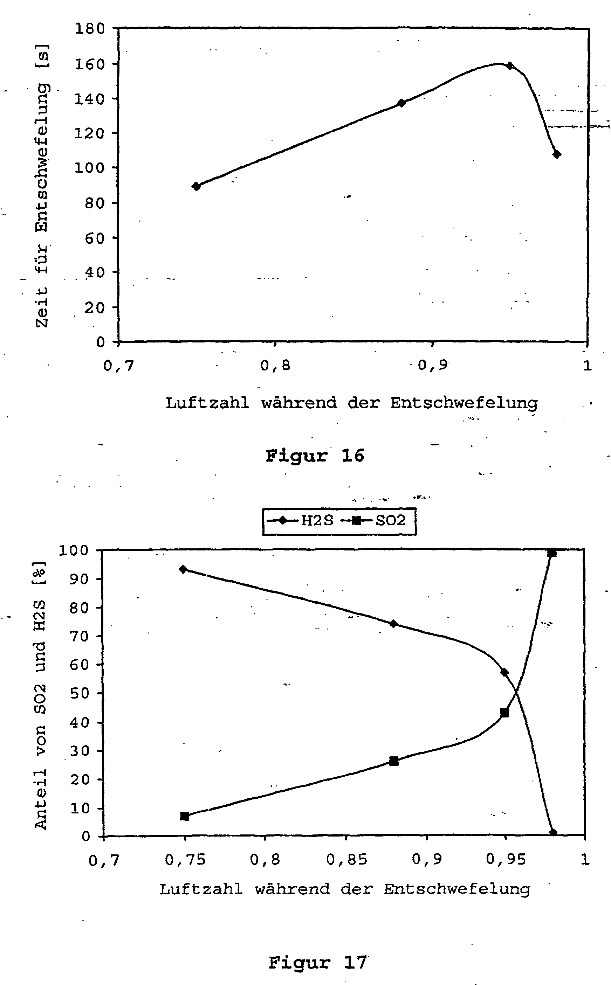

Figur 16 zeigt die Dauer der Entschwefelung bei vier verschiedenen Luftzahlen. Während eine Luftzahl von 0,98 einen in Hinsicht auf die Entschwefelungsdauer sowie Unterdrükkung von Schwefelwasserstoff günstigen Wert darstellt, ist es möglich, die Dauer der Entschwefelung durch starkes Absenken der Luftzahl weiter zu verringern. So wird bei einer Luftzahl von 0,75 eine schnellere Entschwefelung erreicht als bei einer Luftzahl von 0,98. Allerdings wird hierbei der freigesetzte Schwefel nahezu quantitativ in Schwefelwasserstoff überführt und muß in diesem Fall durch gesonderte Maßnahmen wieder zu Schwefeldioxid oxidiert werden.

Figur 17 zeigt die Prozentanteile von Schwefelwasserstoff und Schwefeldioxid im Abgas hinter der Schwefelfalle in Abhängigkeit von der Luftzahl während der Entschwefelung. Diese Verhältnisse hängen stark vom Volumen der eingesetzten Schwefelfalle und somit von der Verweilzeit des freigesetzten Schwefeldioxids in der Schwefelfalle ab. Je größer die Verweilzeit im Bereich der Schwefelfalle ist, um so mehr Schwefelwasserstoff wird gebildet.

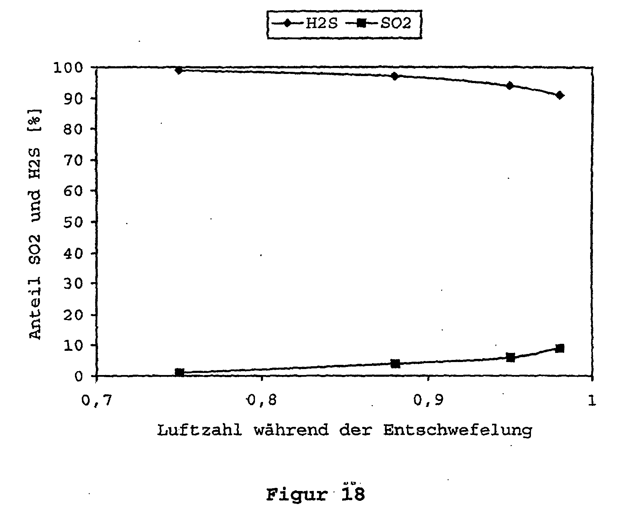

Dieses Verhalten gilt auch für den nachgeschalteten Speicherkatalysator, der das durchströmende Schwefeldioxid unter den reduzierenden Abgasbedingungen während der Entschwefelung weiter zu Schwefelwasserstoff reduziert. Figur 18 zeigt die gemessenen Prozentanteile von Schwefeldioxid und Schwefelwasserstoff im Abgas hinter dem Speicherkatalysator in Abhängigkeit von der Luftzahl während der Entschwefelung. Es ist zu erkennen, daß selbst bei Verwendung einer Luftzahl von 0,98 während der Entschwefelung der überwiegende Teil des Schwefels in Form von Schwefelwasserstoff den Speicherkatalysator verläßt.

Die Emission von Schwefelwasserstoff ist daher bei Verwendung eines großvolumigen Katalysatorsystems und den daraus resultierenden langen Verweilzeiten der freigesetzten Schwefelkomponenten im Katalysatorsystem nur schwer vermeidbar.

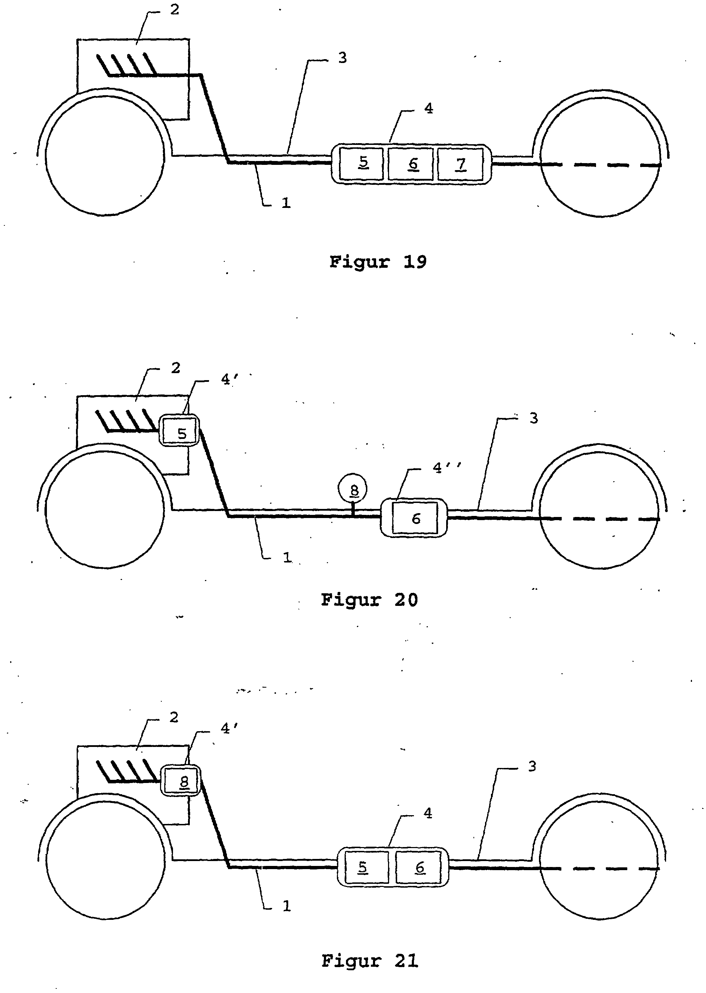

In einer weiteren Ausgestaltung der Erfindung wird daher die Emission von Schwefelwasserstoff durch einen hinter den Speicherkatalysator angeordneten Katalysator vermindert, der Schwefelwasserstoff absorbiert. Für diese Zwecke sind Katalysatoren bekannt, die unter reduzierenden Bedingungen mit Hilfe von Oxiden des Mangans, Nickels, Zinks oder Eisens den Schwefelwasserstoff als Sulfid zwischenspeichern und unter stöchiometrischen oder geringfügig mageren Bedingungen wieder als Schwefeldioxid freigeben. Der Aufbau einer solchen Abgasanlage ist in Figur 19 dargestellt. Dem Speicherkatalysator ist ein weiterer Katalysator (7) nachgeschaltet und mit diesem zusammen in einem Konvertergehäuse untergebracht. Katalysator (7) unterdrückt auf die soeben beschriebene Weise die Emission von Schwefelwasserstoff .

Eine weitere Möglichkeit der Unterdrückung von Schwefelwasserstoff besteht darin, durch Sekundärluftzugabe die Konzentration der reduzierenden Komponenten, insbesondere des Wasserstoffs, vor dem Speicherkatalysator zu verringern und somit die Bildung von Schwefelwasserstoff zu unterdrücken. Die Abgasverhältnisse über dem Speicherkatalysator müssen jedoch netto reduzierend bleiben, um eine Abspeicherung des freigesetzten Schwefeldioxids auf dem Speicherkatalysator zu verhindern. Eine solche Abgasreinigungsanlage ist in Figur 20 dargestellt. Die Schwefelfalle (5) ist getrennt vom Speicherkatalysator hinter dem Motor angeordnet. Vor dem Speicherkatalysator wird mit Hilfe einer Luftpumpe (8) Sekundärluft in den Abgasstrom eingedüst. Diese Konfiguration der Abgasanlage kommt insbesondere dann zur Anwendung, wenn zur Entschwefelung der Schwefelfalle und gegebenenfalls des Speicherkatalysators die Luftzahl des Abgases bis auf einen Wert zwischen 0,6 und 0,8 abgesenkt wird.

Figur 21 zeigt eine Abgasanlage, bei der die Schwefelfalle 5 nicht mit katalytisch aktiven Elementen zur Oxidation der Schwefeloxide versehen ist. Die Oxidation der Schwefeloxide erfolgt in diesem Fall an einem motornahen Katalysator 8.

**Patentansprüche**

1. Verfahren zum Betreiben einer Abgasreinigungsanlage für eine Brennkraftmaschine, die während der überwiegenden Betriebsdauer mit mageren Luft/Kraftstoff-Verhältnissen betrieben wird, wobei die Abgasreinigungsanlage enthält:

   - einen Stickoxid-Speicherkatalysator mit einem Aktivitätsfenster $\Delta T_{NOX}$ zwischen den Temperaturen $T_{K,1}$ und $T_{K,2}$ für die Speicherung der Stickoxide bei Luftzahlen des Abgases größer 1 und Freisetzung der Stickoxide bei Luftzahlen kleiner gleich 1 und einer Entschwefelungstemperatur $T_{K,DeSOx}$ oberhalb derer auf dem Katalysator gespeicherten Sulfate bei Luftzahlen kleiner gleich 1 zersetzt werden und
   - eine stromaufwärts des Stickoxid-Speicherkatalysators und in einem Abstand zu diesem angeordnete Schwefelfalle mit einer Entschwefelungstemperatur $T_{S,DeSOx}$ oberhalb derer auf der Schwefelfalle gespeicherte Sulfate bei Luftzahlen kleiner gleich 1 zersetzt werden,

   wobei zwischen Schwefelfalle und Speicherkatalysator eine Temperaturdifferenz $\Delta T_{S,K}$ zwischen der Abgastemperatur $T_S$ vor der Schwefelfalle und der Abgastemperatur $T_K$ vor dem Speicherkatalysator besteht, und das Verfahren die folgenden Schritte aufweist:

   a) Speichern der im Abgas enthaltenen Stickoxide auf dem Stickoxid-Speicherkatalysator und der Schwefeloxide auf der Schwefelfalle bei Luftzahlen über 1 und Abgastemperaturen $T_K$ innerhalb des Aktivitätsfensters $\Delta T_{NOX}$, wobei gleichzeitig die Abgastemperatur $T_S$ kleiner als die Entschwefelungstemperatur $T_{S,DeSOx}$ ist und zyklisches Absenken der Luftzahl des Abgases unter 1 zur Freisetzung der gespeicherten Stickoxide (Abschluß eines Speicherzyklus),
   b) Entschwefeln der Schwefelfalle nach jeweils einer vorgegebenen Anzahl $N_1$ von Stickoxid-Speicherzyklen unmittelbar nach Abschluß eines Speicherzyklus durch Anheben der Abgastemperatur $T_S$ über die Entschwefelungstemperatur $T_{S,DeSOx}$ der Schwefelfalle sowie Absenken der Luftzahl des Abgases unter 1 und zyklische Wiederholung der Schritte a) und b).

2. Verfahren nach Anspruch 1,
   **dadurch gekennzeichnet,**
   **daß** zwischen der Entschwefelungstemperatur $T_{S,DeSOx}$, der Temperaturdifferenz $\Delta T_{S,K}$ zwischen den Abgastemperaturen $T_S$ vor der Schwefelfalle und $T_K$ vor dem Speicherkatalysator und der oberen Grenztemperatur $T_{K,2}$ des Aktivitätsfensters des Speicherkatalysators die folgende Beziehung besteht:

$$T_{K,2} + \Delta T_{s,K} > T_{S,DeSOx}$$

3. Verfahren nach Anspruch 1 oder 2,
**dadurch gekennzeichnet,**
**daß** die Anzahl $N_1$ der Stickoxid-Speicherzyklen zwischen zwei Entschwefelungen der Schwefelfalle zwischen 10 und 100000 liegt.

4. Verfahren nach Anspruch 3,
**dadurch gekennzeichnet,**
**daß** zur Freisetzung der Stickoxide vom Speicherkatalysator die Luft zahl des Abgases auf einen Wert zwischen 0,6 und 0,9 abgesenkt wird.

5. Verfahren nach Anspruch 4,
**dadurch gekennzeichnet,**
**daß** das Verfahren einen weiteren Schritt b' zum Entschwefeln des Speicherkatalysators nach jeweils einer vorgegebenen Anzahl $N_2$ von Stickoxid-Speicherzyklen aufweist, wobei zur Entschwefelung die Abgastemperatur $T_K$ vor dem Speicherkatalysator über seine Entschwefelungstemperatur $T_{K,DeSOx}$ angehoben und die Luftzahl unter 1 abgesenkt wird.

6. Verfahren nach Anspruch 5,
**dadurch gekennzeichnet,**
**daß** die Anzahl $N_2$ der Stickoxid-Speicherzyklen zwischen zwei Entschwefelungen des Speicherkatalysators um den Faktor 2 bis 100 größer als $N_1$ ist.

7. Verfahren nach Anspruch 4 oder 6,
**dadurch gekennzeichnet,**
**daß** zur Entschwefelung von Schwefelfalle und gegebenenfalls Speicherkatalysator die Luftzahl des Abgases auf einen Wert zwischen 0,96 und 1,01, bevorzugt zwischen 0,97 und 1,0, abgesenkt wird.

8. Verfahren nach Anspruch 4 oder 6,
**dadurch gekennzeichnet,**
**daß** zur Entschwefelung von Schwefelfalle und gegebenenfalls Speicherkatalysator die Luftzahl des Abgases auf einen Wert zwischen 0,6 und 0,8 abgesenkt wird.

9. Verfahren nach Anspruch 8,
**dadurch gekennzeichnet,**
**daß** vor dem Stickoxid-Speicherkatalysator während der Entschwefelung der Schwefelfalle Sekundärluft zugegeben wird, um die Luftzahl bei Eintritt in den Speicherkatalysator auf einen Wert zwischen 0,98 und 1,01 anzuheben.

10. Verfahren nach Anspruch 1,
**dadurch gekennzeichnet,**
**daß** der Stickoxid-Speicherkatalysator wenigstens eine Stickoxid-Speicherkomponente aus Verbindungen von Lithium, Natrium, Kalium, Cäsium, Rubidium, Kalzium, Strontium, Barium, Lanthan und Yttrium enthält und als katalytisch aktive Komponente wenigsten ein Metall der Platingruppenelemente Platin, Palladium, Rhodium und Iridium aufweist.

11. Verfahren nach Anspruch 1,
**dadurch gekennzeichnet,**
**daß** die Schwefelfalle wenigstens eine Schwefeloxid-Speicherkomponente aus Verbindungen der Erdalkalimetalle Magnesium, Kalzium, Strontium und Barium sowie Lanthan enthält.

12. Verfahren nach Anspruch 1,
**dadurch gekennzeichnet,**
**daß** es sich bei der Schwefeloxid-Speicherkomponente um einen Mg/Al-Hydrotalcit handelt.

13. Verfahren nach Anspruch 12,
**dadurch gekennzeichnet,**

**daß** der Mg/Al-Hydrotalcit in einer Menge von 0,5 bis 40 Gew.-%, bezogen auf das Gesamtgewicht, mit wenigstens einem Element aus der Gruppe, welche aus den Erdalkalielementen Kalzium, Strontium, Barium und den Seitenerdoxiden gebildet wird, dotiert ist.

**14.** Verfahren nach Anspruch 13,
**dadurch gekennzeichnet,**
**daß** der Mg/Al-Hydrotalcit vor der Verwendung als Schwefeloxid-Speicherkomponente bei 400 bis 600°C für die Dauer von 1 bis 10 Stunden kalziniert wird.

**15.** Verfahren nach einem der Ansprüche 11 bis 14,
**dadurch gekennzeichnet,**
**daß** die Schwefelfalle zusätzlich wenigstens ein Metall der Platingruppenelemente Platin, Palladium, Rhodium und Iridium aufweist.

**16.** Verfahren nach Anspruch 1,
**dadurch gekennzeichnet,**
**daß** es sich bei der Schwefelfalle um einen konventionellen Abgaskatalysator handelt, der zusätzlich die in den Ansprüchen 9 bis 12 genannten Speicherkomponenten enthält.

**17.** Verfahren nach Anspruch 1,
**dadurch gekennzeichnet,**
**daß** die Schwefelfalle unmittelbar vor dem Speicherkatalysator angeordnet ist und beide in einem gemeinsamen Konvertergehäuse untergebracht sind.

**18.** Verfahren nach Anspruch 1 oder 2,
**dadurch gekennzeichnet,**
**daß** dem Stickoxid-Speicherkatalysator ein konventioneller Abgaskatalysator nachgeschaltet ist, der zusätzlich Oxide des Mangans, Nickels, Zinks oder Eisens als Speichermaterialien für Schwefelwasserstoff enthält.

**19.** Verfahren nach Anspruch 17 oder 18,
**dadurch gekennzeichnet,**
**daß** die Schwefelfalle keine katalytisch aktiven Komponenten für die Oxidation der Schwefeloxide aufweist und daß unmittelbar hinter dem Motorauslaß ein Oxidationsoder Dreiwegkatalysator angeordnet ist, welcher die Oxidation der Schwefeloxide bewirkt.

**20.** Verfahren nach Anspruch 1,
**dadurch gekennzeichnet,**
**daß** die Schwefelfalle vom Speicherkatalysator beabstandet in einem separaten Gehäuse angeordnet ist.

**21.** Verfahren nach Anspruch 20,
**dadurch gekennzeichnet,**
**daß** die Schwefelfalle unmittelbar hinter dem Motorauslaß angeordnet ist.

**Claims**

**1.** Method of operating an exhaust gas purification system for an internal combustion engine that is operated with lean air/fuel ratios for the majority of the operating time, wherein the exhaust gas purification system contains:

- a nitrogen oxide storage catalytic converter having an activity window $\Delta T_{NOX}$ between the temperatures $T_{K,1}$ and $T_{K,2}$ for the storage of nitrogen oxides at air ratios of the exhaust gas greater than 1 and the freeing of nitrogen oxides at air ratios less than or equal to 1, and a desulfurisation temperature $T_{K,DeSOx}$ above which sulfates stored on the catalytic converter are decomposed at air ratios less than or equal to 1, and
- a sulfur trap which is arranged upstream of and at a distance from the nitrogen oxide storage catalytic converter and which has a desulfurisation temperature $T_{S,DeSOx}$ above which sulfates stored on the sulfur trap are decomposed at air ratios less than or equal to 1,

wherein, between the sulfur trap and the storage catalytic converter, there is a temperature difference $\Delta T_{S,K}$ be-

tween the exhaust gas temperature $T_S$ upstream of the sulfur trap and the exhaust gas temperature $T_K$ upstream of the storage catalytic converter, and the method comprises the following steps:

a) storage of the nitrogen oxides contained in the exhaust gas on the nitrogen oxide storage catalytic converter and of the sulfur oxides on the sulfur trap at air ratios greater than 1 and exhaust gas temperatures $T_K$ within the activity window $\Delta T_{NOX}$, the exhaust gas temperature $T_s$ at the same time being lower than the desulfurisation temperature $T_{S,DeSOx}$, and cyclic lowering of the air ratio of the exhaust gas to below 1 in order to free the stored nitrogen oxides (completion of a storage cycle),

b) desulfurisation of the sulfur trap after a predetermined number $N_1$ of nitrogen oxide storage cycles, immediately after completion of a storage cycle, by raising the exhaust gas temperature $T_S$ above the desulfurisation temperature $T_{S,DeSOx}$ of the sulfur trap and lowering the air ratio of the exhaust gas to below 1, and cyclic repetition of steps a) and b).

**2.** Method according to claim 1,
**characterised in that**
the following relationship exists between the desulfurisation temperature $T_{S,DeSOx}$, the temperature difference $\Delta T_{S,K}$ between the exhaust gas temperature $T_S$ upstream of the sulfur trap and the exhaust gas temperature $T_K$ upstream of the storage catalytic converter, and the upper limiting temperature $T_{K,2}$ of the activity window of the storage catalytic converter:

$$T_{K,2} + \Delta T_{S,K} > T_{S,DeSOx}$$

**3.** Method according to claim 1 or 2,
**characterised in that**
the number $N_1$ of nitrogen oxide storage cycles between two operations of desulfurising the sulfur trap is from 10 to 100,000.

**4.** Method according to claim 3,
**characterised in that**
in order to free the nitrogen oxides from the storage catalytic converter, the air ratio of the exhaust gas is lowered to a value from 0.6 to 0.9.

**5.** Method according to claim 4,
**characterised in that**
the method comprises a further step b' for the desulfurisation of the storage catalytic converter after a predetermined number $N_2$ of nitrogen oxide storage cycles, wherein, for the desulfurisation, the exhaust gas temperature $T_K$ upstream of the storage catalytic converter is raised above its desulfurisation temperature $T_{K,DeSOx}$ and the air ratio is lowered to below 1.

**6.** Method according to claim 5,
**characterised in that**
the number $N_2$ of nitrogen oxide storage cycles between two operations of desulfurising the storage catalytic converter is greater than $N_1$ by a factor of from 2 to 100.

**7.** Method according to claim 4 or 6,
**characterised in that**
for the desulfurisation of the sulfur trap and, optionally, of the storage catalytic converter, the air ratio of the exhaust gas is lowered to a value from 0.96 to 1.01, preferably from 0.97 to 1.0.

**8.** Method according to claim 4 or 6,
**characterised in that**
for the desulfurisation of the sulfur trap and, optionally, of the storage catalytic converter, the air ratio of the exhaust gas is lowered to a value from 0.6 to 0.8.

**9.** Method according to claim 8,
**characterised in that**
during the desulfurisation of the sulfur trap, secondary air is added upstream of the nitrogen oxide storage catalytic converter in order to raise the air ratio on entry into the storage catalytic converter to a value from 0.98 to 1.01.

**10.** Method according to claim 1,
**characterised in that**
the nitrogen oxide storage catalytic converter contains at least one nitrogen oxide storage component from compounds of lithium, sodium, potassium, caesium, rubidium, calcium, strontium, barium, lanthanum and yttrium, and contains as the catalytically active component at least one metal of the platinum group elements platinum, palladium, rhodium and iridium.

**11.** Method according to claim 1,
**characterised in that**
the sulfur trap contains at least one sulfur oxide storage component from compounds of the alkaline earth metals magnesium, calcium, strontium and barium as well as lanthanum.

**12.** Method according to claim 1,
**characterised in that**
the sulfur oxide storage component is a Mg/Al hydrotalcite.

**13.** Method according to claim 12,
**characterised in that**
the Mg/Al hydrotalcite is doped in an amount of from 0.5 to 40 wt.%, based on the total weight, with at least one element from the group formed by the alkaline earth elements calcium, strontium, barium and the rare earth oxides.

**14.** Method according to claim 13,
**characterised in that**
the Mg/Al hydrotalcite is calcined at from 400 to 600°C for a duration of from 1 to 10 hours before being used as the sulfur oxide storage component.

**15.** Method according to any one of claims 11 to 14,
**characterised in that**
the sulfur trap additionally contains at least one metal of the platinum group elements platinum, palladium, rhodium and iridium.

**16.** Method according to claim 1,
**characterised in that**
the sulfur trap is a conventional exhaust gas catalytic converter that additionally contains the storage components mentioned in claims 9 to 12.

**17.** Method according to claim 1,
**characterised in that**
the sulfur trap is arranged immediately upstream of the storage catalytic converter, and both are accommodated in a common converter housing.

**18.** Method according to claim 1 or 2,
**characterised in that**
there is arranged downstream of the nitrogen oxide storage catalytic converter a conventional exhaust gas catalytic converter that additionally contains oxides of manganese, of nickel, of zinc or of iron as storage materials for hydrogen sulfide.

**19.** Method according to claim 17 or 18,
**characterised in that**
the sulfur trap contains no catalytically active components for the oxidation of sulfur oxides, and **in that** there is arranged immediately after the engine outlet an oxidation or three-way catalytic converter that effects oxidation of sulfur oxides.

**20.** Method according to claim 1,
**characterised in that**
the sulfur trap is arranged at a distance from the storage catalytic converter in a separate housing.

**21.** Method according to claim 20,
**characterised in that**
the sulfur trap is arranged immediately after the engine outlet.

## Revendications

**1.** Procédé de mise en oeuvre d'une installation de nettoyage des gaz d'échappement d'un moteur à combustion interne qui travaille pendant la principale partie de sa durée de fonctionnement avec un rapport de mélange air/carburant maigre,
l'installation de nettoyage des gaz d'échappement comprenant :

- un catalyseur accumulateur d'oxydes d'azote, avec une fenêtre d'activité $\Delta T_{NOX}$ comprise entre les températures $T_{K,1}$ et $T_{K,2}$ pour le stockage des oxydes d'azote pour des coefficients d'air des gaz d'échappement supérieurs à 1 et libération des oxydes d'azote pour des coefficients d'air inférieurs ou égaux à 1 ainsi que pour une température de désulfuration $T_{K,DeSOx}$ au-delà de laquelle les sulfates
- stockés dans le catalyseur sont décomposés pour des coefficients d'air égaux ou inférieurs à 1, et
- un piège à soufre à une distance en amont du catalyseur d'accumulation des oxydes d'azote, et qui, pour une température supérieure à la température de désulfuration $T_{S.DeSOx}$ décompose les sulfates retenus dans le piège à soufre pour des coefficients d'air inférieurs ou égaux à 1,

avec entre le piège à soufre et le catalyseur accumulateur une différence de température $\Delta T_{S,K}$ entre la température des gaz d'échappement $T_S$ en amont du piège à soufre et la température des gaz d'échappement $T_K$ en amont du catalyseur accumulateur le procédé comprenant les étapes suivantes :

a) stockage des oxydes d'azote contenus dans les gaz d'échappement dans le catalyseur accumulateur d'oxydes d'azote et des oxydes de soufre dans le piège à soufre, pour des coefficients d'air supérieurs à 1 et pour une température de gaz d'échappement $T_K$ à l'intérieur de la fenêtre d'activité $\Delta T_{NOX,}$ et en même temps une température des gaz d'échappement $T_S$ inférieure à la température de désulfuration $T_{S,DeSOx}$ et abaissement cyclique du coefficient d'air des gaz d'échappement sous la valeur 1 pour libérer les oxydes d'azote accumulés (fin d'un cycle de stockage),
b) désulfuration du piège à soufre après chaque fois un nombre prédéterminé $N_1$ de cycles d'accumulation d'oxydes d'azote, directement à la fin d'un cycle d'accumulation par relèvement de la température des gaz d'échappement $T_S$ au-delà de la température de désulfuration $T_{S,DeSOx}$ du piège à soufre et abaissement du coefficient d'air des gaz d'échappement en dessous de 1 et répétition cyclique des étapes a) et b).

**2.** Procédé selon la revendication 1,
**caractérisé en ce qu'**
on a la relation suivante :

$$T_{K,2} + \Delta T_{S,K} > T_{S,DeSOx}$$

entre d'une part la température de désulfuration $T_{S,DeSOx,}$ et d'autre part la différence de température $\Delta T_{S,K}$ entre la température des gaz d'échappement $T_S$ en amont du piège à soufre et celle $T_K$ en amont du catalyseur accumulateur, ainsi que la température limite supérieure $T_{K,2}$ de la fenêtre d'activité du catalyseur accumulateur.

**3.** Procédé selon l'une quelconque des revendications 1 ou 2,
**caractérisé en ce que**
le nombre $N_1$ des cycles accumulateurs d'oxydes d'azote entre deux opérations de désulfuration du piège à soufre est compris entre 10 et 100 000.

**4.** Procédé selon la revendication 3,
**caractérisé en ce que**
pour libérer les oxydes d'azote du catalyseur accumulateur on abaisse le coefficient d'air des gaz d'échappement à une valeur comprise entre 0,6 et 0,9.

**5.** Procédé selon la revendication 4,

**caractérisé en ce que**
le procédé comporte une autre étape b' pour désulfurer le catalyseur accumulateur, chaque fois après un nombre prédéterminé $N_2$ de cycles accumulateurs d'oxydes d'azote, et pour désulfurer, on relève la température des gaz d'échappement TK le catalyseur accumulateur au-dessus de sa température de désulfuration $T_{K,DeSOx}$ et on abaisse le coefficient d'air en dessous de 1.

6. Procédé selon la revendication 5,
**caractérisé en ce que**
le nombre $N_2$ des cycles accumulateurs d'oxyde d'azote entre deux opérations de désulfuration du catalyseur à accumulateur est de 2 à 100 fois plus grands que $N_1$

7. Procédé selon l'une quelconque des revendications 4 ou 6,
**caractérisé en ce que**
pour désulfurer le piège à soufre et le cas échéant le catalyseur accumulateur, on abaisse le coefficient d'air des gaz d'échappement à une valeur comprise entre 0,96 et 1,01 et de préférence entre 0,97 et 1,0.

8. Procédé selon l'une quelconque des revendications 4 ou 6,
**caractérisé en ce que**
pour désulfurer le piège à soufre et le cas échéant le catalyseur accumulateur on abaisse le coefficient d'air des gaz d'échappement à une valeur comprise entre 0,6 et 0,8.

9. Procédé selon la revendication 8,
**caractérisé en ce qu'**
en amont du catalyseur accumulateur d'oxydes d'azote, pendant l'opération de désulfuration du piège à soufre on ajoute de l'air secondaire pour relever le coefficient d'air à une valeur comprise entre 0,98 et 1,01 avant son entrée dans le catalyseur accumulateur.

10. Procédé selon la revendication 1,
**caractérisé en ce que**
le catalyseur accumulateur d'oxydes d'azote contient au moins un composante d'accumulation d'oxydes d'azote, formé des combinaisons de lithium, sodium, potassium, césium, rubidium, calcium, strontium, baryum, lanthane et yttrium et comme composant catalytiquement actif, au moins un métal du groupe du platine : platine, palladium, rhodium, iridium.

11. Procédé selon la revendication 1,
**caractérisé en ce que**
le piège à soufre comporte au moins un composant d'accumulation d'oxydes de soufre, formé des combinaisons des métaux alcalino-terreux : magnésium, calcium, strontium, baryum et lanthane.

12. Procédé selon la revendication 1,
**caractérisé en ce que**
le composant accumulateur d'oxydes de soufre est un hydrotalcite Mg/Al.

13. Procédé selon la revendication 12,
**caractérisé en ce que**
l'hydrotalcite Mg/Al est dopé suivant une quantité comprise entre 0,5 et 40 % en poids rapporté au poids total avec au moins un élément du groupe formé des alcalino-terreux, calcium, strontium, baryum et des oxydes des terres rares.

14. Procédé selon la revendication 13,
**caractérisé en ce que**
l'hydrotalcite Mg/Al est calciné à une température comprise entre 400 et 600°C pendant une durée de 1 à 10 heures pour servir de composant accumulateur d'oxydes de soufre.

15. Procédé selon l'une quelconque des revendications 11 à 14,
**caractérisé en ce que**
le piège à soufre comporte en outre au moins un métal des éléments du groupe du platine : platine, palladium, rhodium, iridium.

**16.** Procédé selon la revendication 1,
**caractérisé en ce que**
le piège à soufre est un catalyseur de gaz d'échappement, classique, avec en plus des composants accumulateurs selon les revendications 9 à 12.

**17.** Procédé selon la revendication 1,
**caractérisé en ce que**
le piège à soufre est prévu directement en amont du catalyseur accumulateur et les deux sont installés dans un boîtier de conversion commun.

**18.** Procédé selon l'une quelconque des revendications 1 ou 2,
**caractérisé en ce que**
le catalyseur accumulateur d'oxydes d'azote est suivi en aval d'un catalyseur de gaz d'échappement, classique, qui comporte en plus des oxydes de manganèse, de nickel, de zinc ou de fer comme matières d'accumulation pour l'hydrogène sulfuré.

**19.** Procédé selon l'une quelconque des revendications 17 ou 18,
**caractérisé en ce que** le piège à soufre ne comporte pas de composant catalytiquement actif pour l'oxydation des oxydes de soufre et directement en aval de la sortie du moteur, un catalyseur d'oxydation ou catalyseur à trois voies assure l'oxydation des oxydes de soufre.

**20.** Procédé selon la revendication 1,
**caractérisé en ce que**
le piège à soufre est installé à une certaine distance du catalyseur accumulateur et dans un boîtier séparé.

**21.** Procédé selon la revendication 20,
**caractérisé en ce que**
le piège à soufre est installé directement derrière la sortie du moteur.

**Figur 1**

**Figur 2**

Figur 3

23

EP 0 945 608 B1

Figur 4

Temperatur

Motor  Schwefelfalle  Speicherkat

$T_{M,3}$

$T_{M,2}$

$T_{M,1}$

$T_{S,DeSOx}$

$T_{K,DeSOx}$

$T_{K,2}$

$T_{K,1}$

$\Delta T_{NOx}$

b'

b

a

**Figur 5**

Temperatur

$T_{M,3}$

$T_{M,2}$

$T_{M,1}$

b'

b

a

$T_{S,DeSOx}$

$T_{K,DeSOx}$

$T_{K,2}$

$\Delta T_{NOx}$

$T_{K,1}$

Motor

Schwefelfalle  Speicherkat

Figur 6

Figur 7

Figur 8

**Figur 9**

**Figur 10**

**Figur 11**

**Figur 12**

Figur 13

Figur 14

Figur 15

**Figur 16**

**Figur 17**

Figur 18

Figur 19

Figur 20

Figur 21